(19) Europäisches Patentamt
European Patent Office
Office européen des brevets

(11) **EP 4 629 467 A1**

(12) **EUROPÄISCHE PATENTANMELDUNG**

(43) Veröffentlichungstag:
**08.10.2025 Patentblatt 2025/41**

(21) Anmeldenummer: **24168477.8**

(22) Anmeldetag: **04.04.2024**

(51) Internationale Patentklassifikation (IPC):
*H02J 3/38* (2006.01)       *H02J 3/50* (2006.01)

(52) Gemeinsame Patentklassifikation (CPC):
**H02J 3/381; H02J 3/50;** H02J 2300/28

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Wobben Properties GmbH
26607 Aurich (DE)**

(72) Erfinder:
• **Malekian Boroujeni, Kaveh
28201 Bremen (DE)**
• **Busker, Kai
26629 Großefehn (DE)**

(74) Vertreter: **Eisenführ Speiser
Patentanwälte Rechtsanwälte PartGmbB
Postfach 10 60 78
28060 Bremen (DE)**

(54) **VERFAHREN ZUM STEUERN EINES WINDPARKS**

(57)     Die Erfindung betrifft ein Verfahren zum Bereitstellen einer Parkblindleistung durch einen mehrere Windenergieanlagen aufweisenden Windpark, umfassend die Schritte Empfangen eines Parkblindleistungssollwertes als Vorgabe einer durch den Windpark einzuspeisenden Blindleistung, Bestimmen eines Parkspannungssollwertes als gemeinsamen Spannungssollwert für alle Windenergieanlagen in Abhängigkeit von dem Parkblindleistungssollwert, Bestimmen eines individuellen Anlagenspannungssollwertes jeweils für eine der Windenergieanlagen in Abhängigkeit von dem Parkspannungssollwert, Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenistspannung und dem individuellen Anlagenspannungssollwert der jeweiligen Windenergieanlage und wobei der individuelle Anlagenspannungssollwert jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt wird.

Fig. 9

**Beschreibung**

Die vorliegende Erfindung betrifft ein Verfahren zum Bereitstellen einer Blindleistung durch einen mehrere Windenergieanlagen aufweisenden Windpark. Außerdem betrifft die vorliegende Erfindung einen entsprechenden Windpark.

Windparks sind bekannt, sie speisen elektrische Leistung aus Wind in ein elektrisches Versorgungsnetz ein. Windparks können dabei als Kraftwerke verstanden werden, die auch signifikanten Einfluss auf die Netzstabilität haben können und entsprechend zur Netzstützung eingesetzt werden können. Unter anderem kann ein Netzbetreiber Vorgaben an den Windpark machen, die dieser entsprechend umsetzen soll.

Eine solche Vorgabe kann eine gewünschte Blindleistung sein, die der Park insgesamt einspeisen soll. Eine solche Vorgabe kann dynamisch vorgegeben werden, es geht also weniger um eine einmalige Vorgabe, sondern um eine, die sich ändern kann, nämlich insbesondere je nach aktuellem Bedürfnis des elektrischen Versorgungsnetzes und damit des Netzbetreibers.

Ein solcher gemeinsamer Blindleistungswert des Windparks ist dann auf die einzelnen Windenergieanlagen aufzuteilen. Eine Möglichkeit wäre, diese Blindleistung gleichmäßig auf alle Windenergieanlagen zu verteilen, sodass bspw. bei 10 Windenergieanlagen im Windpark jede Windenergieanlage ein Zehntel der Blindleistung erzeugen muss. Dadurch könnte sich allerdings eine unangemessene Verteilung ergeben, wenn die Windenergieanlagen nicht gleich groß sind oder in dem Moment nicht gleich viel Leistung erzeugen, weil bspw. eine der Windenergieanlagen kleiner als die anderen ist, oder durch eine andere Windenergieanlage oder anderes Hindernis temporär in einem Windschatten ist.

Es kommt auch in Betracht, jeweils prozentuale Werte der Blindleistung an die einzelnen Windenergieanlagen zu übertragen, wobei diese prozentualen Werte sich auf die jeweilige Nennleistung oder erzeugte Leistung der jeweiligen Windenergieanlage beziehen können. Ein solcher Wert kann ausgeregelt werden, indem dann, wenn die vorgegebene Parkblindleistung noch nicht erreicht ist, dieser prozentuale Wert angehoben wird, sodass dann alle Anlagen mehr Blindleistung erzeugen, bis der gemeinsame vorgegebene Parkblindleistungswert erreicht wird. Besonders, wenn sich der prozentuale Wert auf die jeweilige Nennleistung der Windenergieanlage bezieht, wird die aktuelle Leistungsproduktion der Windenergieanlage nicht berücksichtigt. Wird die aktuell eingespeiste Wirkleistung jeder Windenergieanlage berücksichtigt, so ist der Prozess der Aufteilung der prozentualen Werte einer ständigen Schwankung ausgesetzt.

Grundsätzlich kann es auch ungünstig sein, dass die Windenergieanlagen unterschiedliche Blindleistungen abgeben, weil dadurch eine Asymmetrie entstehen kann.

Es ist auch zu beachten, dass bei der Vorgabe einzelner Blindleistungswerte für die einzelnen Windenergieanlagen eine Regelungsdynamik zu beachten ist, die ggf. nicht an die Regelungsdynamik der einzelnen Windenergieanlagen zur Blindleistungsbestimmung und -einstellung angepasst ist.

Eine Möglichkeit der Blindleistungssteuerung kann darin bestehen, in Abhängigkeit von der vorgegebenen Parkblindleistung einen Spannungssollwert des Parks, also einen Parkspannungssollwert vorzugeben, der an die einzelnen Windenergieanlagen gegeben wird. Die einzelnen Windenergieanlagen können dann in Abhängigkeit von einer Differenz zwischen diesem Parkspannungssollwert und der aktuellen Spannung an der betreffenden Windenergieanlage einen Blindstrom vorgeben, der einfach dieser Differenz, multipliziert mit einem Verstärkungsfaktor, entspricht. Durch eine solche Vorgabe kann jede Windenergieanlage zusätzlich auf Schwankungen der Netzspannung durch veränderte Blindleistungseinspeisung reagieren, weil sich die Netzspannung sofort auf die an jeder Windenergieanlage anliegende Spannung auswirkt.

Wird die vorgegebene Gesamtblindleistung des Parks nicht erreicht, kann der Parkspannungssollwert erhöht oder verringert werden.

Durch Vorgabe der Gesamtblindleistung besteht dann das Problem, dass die Blindleistung durch Asymmetrien bzw. besonders durch unterschiedlich lange Anschlussleitungen der jeweiligen Windenergieanlage im Windpark unterschiedliche Ausgangsspannungen an den jeweiligen Windenergieanlagen auftreten können, sodass die Spannungsdifferenz zwischen Windenergieanlagen variiert, was zu entsprechend unterschiedlichen Blindleistungswerten zwischen den Anlagen führt.

Der vorliegenden Erfindung liegt somit die Aufgabe zu Grunde, zumindest eines der vorstehend beschriebenen Probleme zu adressieren. Insbesondere soll eine Lösung geschaffen werden, bei der ein Parkblindleistungssollwert zur Umsetzung so auf die einzelnen Windenergieanlagen des Windparks aufgeteilt wird, dass eine möglichst gleichmäßige bzw. symmetrische Gesamtsituation der Blindleistungsbereitstellung durch die einzelnen Windenergieanlagen erfolgt. Zumindest soll zu bisher bekannten Lösungen eine Alternative vorgeschlagen werden.

Erfindungsgemäß wird ein Verfahren gemäß Anspruch 1 vorgeschlagen. Somit wird ein Verfahren zum Bereitstellen einer Blindleistung durch einen mehrere Windenergieanlagen aufweisenden Windpark vorgeschlagen, die als Parkblindleistung bezeichnet wird. Insoweit wird ein Verfahren zum Steuern eines Windparks vorgeschlagen. Das Verfahren zum Bereitstellen der Blindleistung bzw. zum Steuern des Windparks sieht das Empfangen eines Parkblindleistungssollwertes als Vorgabe einer durch den Windpark einzuspeisenden Blindleistung vor. Ein solcher Parkblindleistungssollwert kann durch einen Netzbetreiber vorgegeben werden, insbesondere dynamisch vorgegeben werden. Dazu kann der Windpark eine Parksteuereinrichtung aufweisen, die eine Schnittstelle aufweist, über die ein Netzbetreiber, ein Energieversorgungsunternehmen und/oder eine andere Person oder Institution einen solchen Parkblindleistungssollwert eingeben kann. Dies kann durch Eingeben eines absoluten Blindleistungswertes mit der Einheit var erfolgen. Es kann aber auch ein prozentualer Wert eingegeben werden, der sich bspw. auf eine Nennleistung des Windparks bezieht.

Ein Sollwert vom Netzbetreiber kann ein Phasenwinkel φ oder cos(φ), oder unmittelbar ein Wert für eine Blindleistung sein. Darüber hinaus ist es möglich, dass der Parkblindleistungssollwert aus einer vom Netzbetreiber vorgegebenen Q(U)-Funktion ermittelt wird. Aus solchen externen Sollwerten kann schließlich der Parkblindleistungssollwert ermittelt werden.

In Abhängigkeit von diesem Parkblindleistungssollwert wird ein Parkspannungssollwert als gemeinsamer Spannungssollwert für alle Windenergieanlagen bestimmt. Ein solcher Parkspannungssollwert könnte dann - wenn er nicht wie unten noch erläutert modifiziert wird - an jeder Windenergieanlage anliegen, die daraufhin jeweils eigenständig eine Differenz zwischen einem solchen Parkspannungssollwert und der aktuellen Spannung an der Windenergieanlage auszuregeln versucht. Die Spannung an der jeweiligen Windenergieanlage ist besonders eine Spannung an den Anschlussklemmen der jeweiligen Windenergieanlage.

Das Ausregeln einer solchen Spannungsdifferenz kann dadurch erfolgen, dass die jeweilige Windenergieanlage einen P-Regler verwendet. Die Differenz zwischen dem Parkspannungssollwert und der Spannung an den Anschlussklemmen der jeweiligen Windenergieanlage wird also mit einem Proportionalitätsfaktor multipliziert und das Ergebnis ist insbesondere ein Blindstrom, den die betreffende Windenergieanlage erzeugt und abgibt. Entsprechend kann dadurch die an der Windenergieanlage anliegende Spannung erhöht oder verringert werden, wobei aufgrund der Verwendung eines solchen P-Reglers allerdings eine Regelabweichung verbleiben kann. Eine solche Regelabweichung ist dabei auch erwünscht, denn es geht nicht um das absolute Ausregeln dieser Spannungsdifferenz, sondern darum, über eine solche Spannungsdifferenz eine für jede Windenergieanlage individuelle Blindleistungserzeugung bzw. Blindstromerzeugung zu erreichen.

Es wird nun aber vorgeschlagen, dass ein individueller Anlagenspannungssollwert jeweils für eine der Windenergieanlagen in Abhängigkeit von dem gemeinsamen Spannungssollwert, also dem Parkspannungssollwert, bestimmt wird. Insbesondere erhält so jede Windenergieanlage einen individuellen Anlagenspannungssollwert, der auf dem gemeinsamen Spannungssollwert basiert. Mit anderen Worten wird der gemeinsame Spannungssollwert, also der Parkspannungssollwert, für jede Windenergieanlage individuell modifiziert.

Es erfolgt dann ein Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenistspannung und dem individuellen Anlagenspannungssollwert der jeweiligen Windenergieanlage. Somit kann über das Bestimmen des individuellen Anlagenspannungssollwertes die Höhe der Blindleistung bzw. des Blindstroms jeder Windenergieanlage für jede Windenergieanlage individuell beeinflusst werden.

Dazu ist vorgesehen, dass der individuelle Anlagenspannungssollwert jeweils in Abhängigkeit von der individuellen Anlagenblindleistung der jeweiligen Windenergieanlage und in Abhängigkeit von mehreren, insbesondere in Abhängigkeit von allen individuellen Anlagenblindleistungen der Windenergieanlage des Windparks bestimmt wird. Somit hängt der individuelle Anlagenspannungssollwert von der individuellen Anlagenblindleistung und den Blindleistungen insbesondere der übrigen Windenergieanlagen ab. Insbesondere wird hier ein Bezug hergestellt zwischen der individuellen Anlagenblindleistung und den übrigen Anlagenblindleistungen. Besonders kann der Bezug zwischen jeweils einer individuellen Anlagenblindleistung und einem Mittelwert oder einem Durchschnitt aller oder zumindest der übrigen Anlagenblindleistungen hergestellt werden.

Somit wird ein Bezug zwischen der individuellen Anlagenblindleistung und der Gesamtsituation des Windparks hinsichtlich Blindleistung hergestellt, also insbesondere der Bezug zum Durchschnitt aller Anlagenblindleistungen. Dieser Bezug beeinflusst somit den individuellen Anlagenspannungssollwert und der beeinflusst die Erzeugung der Anlagenblindleistung der betreffenden Anlage. Dadurch kann die Anlagenblindleistung angepasst werden, insbesondere an den Durchschnitt aller bzw. der übrigen Anlagenblindleistungen des Windparks. Dadurch wiederum ist es möglich, eine Symmetrierung der erzeugten Anlagenblindleistungen zu erreichen.

Besonders vorteilhaft an diesem Verfahren ist, dass ein Blindleistungsregler in jeder Windenergieanlage verwendet werden kann, der für die gewünschte Symmetrierung nicht angepasst zu werden braucht. Die Symmetrierung ist dadurch erreichbar, dass jeder Blindleistungsregler der Windenergieanlage lediglich einen angepassten Spannungssollwert, nämlich den individuellen Anlagenspannungssollwert erhält. Dieser hängt dabei außerdem von dem gemeinsamen Spannungssollwert, also dem Parkspannungssollwert ab. Wird der vorgegebene Parkblindleistungssollwert verändert, verändert sich dadurch der gemeinsame Spannungssollwert, also der Parkspannungssollwert, was sofort Einfluss auf jeden individuellen Anlagenspannungssollwert hat.

Erhöht sich also bspw. der Parkblindleistungssollwert, kann sich entsprechend der Parkspannungssollwert erhöhen und damit kann sich auch sofort die individuelle Anlagenblindleistung jeder Windenergieanlage erhöhen. Besonders bei Verwendung eines Blindleistungsreglers in jeder Windenergieanlage mit P-Regelverhalten, kann diese Blindleistungs- bzw. Blindstromerhöhung auch sofort erfolgen.

Dabei ist die durch das Bestimmen der individuellen Anlagenspannungssollwerte erreichte Symmetrierung zunächst unverändert. Sie kann ggf. noch an die geänderte Situation, also an den geänderten Parkblindleistungssollwert angepasst werden, was aber nicht so zeitkritisch ist, denn die Erhöhung der individuellen Anlagenblindleistungen und damit auch die Erhöhung der Parkblindleistung ist im Wesentlichen bereits erfolgt. Sie kann sogar schon vollständig erfolgt sein, denn das Symmetrieren durch Verändern der individuellen Anlagenspannungssollwerte verändert im Idealfall nur die interne Aufteilung der erzeugten Blindleistung im Windpark und nicht die insgesamt durch den Park bereitgestellte Blindleistung, die auch als Parkblindleistung bezeichnet werden kann.

Gemäß einem Aspekt wird vorgeschlagen, dass der individuelle Anlagenspannungssollwert aus dem Parkspannungssollwert und einem individuellen Spannungskorrekturwert bestimmt wird. Insbesondere wird dazu der Spannungskorrekturwert von dem Parkspannungssollwert abgezogen. Dazu wird ferner vorgeschlagen, dass der individuelle Spannungskorrekturwert in Abhängigkeit von einer Mittelwertdifferenz, insbesondere aus einer Mittelwertdifferenz bestimmt wird, wobei die Mittelwertdifferenz eine Differenz zwischen der jeweiligen individuellen Anlagenblindleistung und einem Mittelwert aller individuellen Anlagenblindleistungen bezeichnet.

Es wird also ein Mittelwert aus individuellen Anlagenleistungen bestimmt. Insbesondere werden alle individuellen Anlagenblindleistungen aufsummiert und durch die Anzahl der Windenergieanlagen geteilt. Der Spannungskorrekturwert ist also dem Betrage nach umso größer, je stärker die Anlagenblindleistung der jeweils betrachteten Windenergieanlage von der durchschnittlichen Anlagenblindleistung aller Windenergieanlagen im Windpark abweicht. Entsprechend wird auch für die jeweilige Windenergieanlage der Parkspannungssollwert umso stärker modifiziert, umso größer der individuelle Spannungskorrekturwert ist.

Insbesondere wird vorgeschlagen, dass die Mittelwertdifferenz zur Bestimmung des individuellen Spannungskorrekturwertes über einen Regler, insbesondere PI-Regler gegeben wird. Der Spannungskorrekturwert ist also -was sich schon aufgrund der unterschiedlichen Einheiten ergibt - nicht unmittelbar die Differenz zwischen Anlagenblindleistung und Mittelwert aller Anlagenblindleistungen, sondern diese Differenz wird über einen Regler geführt. Wenn der Regler ein PI-Regler ist, wird die Differenz also zum einen mit einer Reglerverstärkung multipliziert und parallel dazu über einen Integrator integriert. Dadurch kann eine stationäre Genauigkeit für die jeweilige Abweichung der individuellen Anlagenblindleistung von dem Durchschnitt der übrigen Anlagenblindleistungen erreicht werden, die Abweichung kann also vollständig ausgeregelt werden.

Außerdem kann über einen solchen PI-Regler eine Reglerdynamik vorgegeben bzw. beeinflusst werden. Besonders kann vorgesehen sein, die Reglerdynamik eines solchen Reglers an eine Reglerdynamik eines Parkreglers anzupassen, der den Parkspannungssollwert in Abhängigkeit von dem Parkblindleistungssollwert vorgibt.

Es ist zu beachten, dass im beispielhaften Fall des PI-Reglers eine stationäre Genauigkeit für die jeweiligen individuellen Anlagenblindleistungswerte erzielbar ist. Es kann also erreicht werden, dass alle individuellen Anlagenblindleistungswerte identisch sind. Es ist zu beachten, dass der genannte PI-Regler nicht dazu führt, dass eine Spannungsdifferenz zwischen jeweils dem individuellen Anlagenspannungssollwert und der an der betreffenden Windenergieanlage erfassten Spannung erreicht wird. Dort ist weiterhin mit einer bleibenden Regelabweichung zu rechnen, jedenfalls dann, wenn in jeder einzelnen Windenergieanlage ein Blindleistungsregler als P-Regler ausgelegt ist.

Ebenfalls ist zu beachten, dass vorzugsweise jede Windenergieanlage durch ihren Blindleistungsregler einen Blindleistungsstrom vorgibt, zur Bestimmung des individuellen Spannungskorrekturwertes aber die individuelle Anlagenblindleistung betrachtet wird. Dadurch kann jeweils durch den Blindleistungsregler jeder Windenergieanlage ein Blindstrom über die Phasenlage des abgegebenen Stroms vorgegeben werden, während aber für die Symmetrierung die tatsächlich abgegebene Blindleistung betrachtet wird. Besonders bei unterschiedlichen Anlagenspannungen, also den jeweils an den Anschlussklemmen der Windenergieanlage anliegenden Spannungen, können hier Unterschiede zwischen der Betrachtung von Blindstrom und Blindleistung auftreten.

Gemäß einem Aspekt wird vorgeschlagen, dass der individuelle Spannungskorrekturwert in Abhängigkeit von einem für die jeweilige Windenergieanlage individuellen Anlagenoffset bestimmt wird. Hier ist besonders vorgesehen, dass der individuelle Spannungskorrekturwert nicht allein in Abhängigkeit von der Abweichung der Blindleistung der jeweiligen Windenergieanlage von einem Mittelwert bestimmt wird, sondern dass durch diesen individuellen Anlagenoffset die Möglichkeit eines weiteren Eingriffs besteht. Es wird durch diesen Anlagenoffset somit ein weiterer Freiheitsgrad geschaffen. Er kann besonders auf die Abweichung aufaddiert werden.

Es wird daher insbesondere vorgeschlagen, dass die beschriebene Mittelwertdifferenz berücksichtigt wird, die als Differenz zwischen der jeweiligen individuellen Anlagenblindleistung und einem Mittelwert aller individuellen Anlagenblindleistungen bestimmt wird. Diese Mittelwertdifferenz wird somit weiterhin zu Grunde gelegt, und sie kann durch den jeweiligen Anlagenoffset verändert werden.

Besonders ist vorgesehen, dass der individuelle Spannungskorrekturwert in Abhängigkeit von der Mittelwertdifferenz und dem individuellen Offset bestimmt wird, insbesondere so, dass der individuelle Anlagenoffset jeweils auf die Mittelwertdifferenz aufaddiert wird, um eine modifizierte Mittelwertdifferenz zu bestimmen und insbesondere die modifizierte Mittelwertdifferenz zur Bestimmung des individuellen Spannungskorrekturwertes über einen bzw. den Regler, insbesondere PI-Regler gegeben wird.

Hierdurch kann die bisherige Struktur zur Bestimmung der Spannungskorrekturwerte beibehalten werden. In dieser beschriebenen Struktur, die teilweise auch nachfolgend noch beschrieben wird, braucht nur der jeweilige individuelle Anlagenoffset auf die jeweilige Mittelwertdifferenz aufgeschaltet zu werden.

Gemäß einem Aspekt wird vorgeschlagen, dass die Summe aller Anlagenoffsets null ist. Dadurch wird erreicht, dass trotz Vorgabe der individuellen Anlagenoffsets, die synonym auch vereinfachend als Anlagenoffsets bezeichnet werden können, eine Symmetrie erhalten bleibt, bzw. dass die Summe aller eingespeister Anlagenblindleistungen den Parkblindleistungssollwert erreicht.

Außerdem oder alternativ wird vorgeschlagen, dass die Anlagenoffsets so bestimmt werden, dass Anlagenblindleistungen an den Windenergieanlagen mit unterschiedlichen Vorzeichen vermieden werden. Die Anlagenoffsets werden insbesondere so bestimmt, dass ein Vergleichsmaß einen Vergleichsgrenzwertwert nicht unterschreitet. Dieser liegt insbesondere zwischen 0,5 und 0,95, oder ist 1, wobei das Vergleichsmaß durch ein Verhältnis des Betrags einer Summe aller eingespeister Anlagenblindleistungen zu einer Summe der Beträge aller Anlagenblindleistungen definiert ist.

Werden Blindleistungen mit unterschiedlichen Vorzeichen erzeugt, also kapazitive und induktive, so führt das zu einer betragsmäßig geringeren Summe im Vergleich zur Summe der Beträge. Das Verhältnis, also der Quotient beider Summen, fällt dadurch unter 1 und kann den Wert 0 erreichen, wenn sich alle Anlagenblindleistungen aufheben. Für den theoretischen Fall, dass alle Anlagenblindleistungen 0 sind, wird für das Verhältnis der Wert 1 angenommen, bzw. das Vergleichsmaß als 1 definiert. Jedenfalls stellt der Wert 1 den optimalen Fall für das Vergleichsmaß dar, denn dann gibt es keine Anlagenblindleistungen mit unterschiedlichen Vorzeichen. Der Wert 1 ist daher durch entsprechende Wahl der Anlagenoffsets anzustreben. Sollte er aber etwas geringer ausfallen, nämlich im Bereich von 0,5 bis 0,95 liegen, so ist das nicht optimal aber besser als unter den Wert von 0,5 zu fallen.

Außerdem oder alternativ werden die Anlagenoffsets so bestimmt, dass das Vergleichsmaß nicht kleiner ist, oder zumindest nicht weniger al 90% des Vergleichsmaßes beträgt als für den Fall, dass alle Anlagenoffsets null sind. Die Anlagenoffsets sollen also so gewählt werden, dass sich die Situation durch sie nicht oder nicht signifikant verschlechtert.

Durch den Vorschlag ohne die individuellen Anlagenoffsets kann erreicht werden, dass die Blindleistungen aller Windenergieanlagen durch individuelle Spannungssollwerte gleich werden. Somit sind die Blindleistungen der Windenergieanlage im ausgeregelten Zustand unabhängig von den Ist-Spannungen sowie den Ist-Wirkleistungen der Windenergieanlagen.

Nun wird durch die individuellen Anlagenoffsets ergänzend Folgendes vorgeschlagen. Es wird nämlich vorgeschlagen, durch das Aufsummieren eines Satzes von Offset-Werten, die Aufteilung der Parkblindleistungssollwerte zwischen den Windenergieanlagen zu weiteren Optimierungszwecken zu beeinflussen. Solche Optimierungszwecke können u. a. eine Verlustoptimierung oder eine optimierte Spannungshaltung beinhalten. Zum Beispiel kann es für die Verlustoptimierung sinnvoll sein, dass sich Windenergieanlagen, die näher zum Netzanschlusspunkt stehen, im Vergleich zu den anderen Windenergieanlagen stärker an einer Blindleistungsbereitstellung beteiligen.

Bei der Bestimmung der Offset-Werte für die Windenergieanlagenblindleistungen, also der Anlagenoffsets, wird vorgeschlagen, dass neben dem Optimierungszweck, oder stattdessen, zwei weitere Einschränkungen berücksichtigt werden, oder zumindest eine davon:

Die Summe aller Offset-Werte, also aller Anlagenoffsets, soll gleich null sein, damit der Parkblindleistungssollwert durch die Offset-Werte nicht beeinflusst wird.

Die Offset-Werte sollten derart gewählt bzw. online oder offline ermittelt werden, dass eine gegenläufige Kombination der Windenergieanlagenblindleistungen, d.h. kapazitive und induktive Blindleistungen zeitgleich durch verschiedene Windenergieanlagen ausgeschlossen ist, zumindest nicht signifikant ist.

Die Anlagenoffsets können insbesondere feste Werte sein, oder abhängig von Betriebsgrößen wie Spannungen, Mittelwert der Anlagenblindleistungen aller Windenergieanlagen des Windparks, Wirkleistung und Blindleistung der einzelnen Windenergieanlagen oder Zustände vorgegeben werden. Ein Zustand, z.B. ein gewünschter Zustand, kann bspw. darin bestehen, dass der Mittelwert der Blindleistungen aller Windenergieanlagen nahezu 0 ist. Ein anderer Zustand kann sein, wenn einzelne Windenergieanlagen ihre Scheinleistungsgrenze erreichen. Aus erfassten Größen können Zustände abgeleitet werden, das kann online ermittelt werden.

Gemäß einem Aspekt wird vorgeschlagen, dass der individuelle Spannungskorrekturwert, der zum Bestimmen des jeweiligen individuellen Anlagenspannungssollwertes aus dem Parkspannungssollwert verwendet wird, jeweils so bestimmt wird, dass eine Summe über alle individuellen Spannungskorrekturwerte null ist. Mit anderen Worten werden also alle individuellen Spannungskorrekturwerte so bestimmt, dass ihre Summe null ist.

Dadurch kann erreicht werden, dass der ursprünglich vorgegebene Parkspannungssollwert zwar individuell modifiziert wird, ein Mittelwert aller individuellen Anlagenspannungssollwerte aber gleichbleibt. Hier liegt besonders der Gedanke zu Grunde, dass die jeweils individuell veränderten Anlagenspannungssollwerte, also gegenüber dem Parkspannungssollwert veränderten Werte, durch den Blindleistungsregler jeder Anlage jeweils einer entsprechend veränderten Blindleistung zugeordnet werden. Dadurch, dass der Mittelwert aller individuellen Anlagenspannungssollwerte gleichbleibt, kann dadurch auch erreicht werden, dass der Mittelwert aller Blindleistungen gleichbleibt und damit die insgesamt vom Windpark erzeugte Blindleistung, mit anderen Worten also die Summe aller Anlagenblindleistungen, gleichbleibt. Dadurch kann erreicht werden, dass das Modifizieren der individuellen Anlagenspannungssollwerte tatsächlich nur eine Symmetrierung im Windpark beeinflusst, nicht aber die insgesamt erzeugte Blindleistung des Parks, also die Parkblindleistung verändert wird.

Diese Maßnahme, dass die Summe über alle individuellen Anlagenspannungssollwerte null ist, wird sowohl für die Lösung mit also auch ohne individuelle Anlagenoffsets vorgeschlagen.

Gemäß einem Aspekt wird vorgeschlagen, dass die individuelle Anlagenblindleistung so bestimmt wird, dass einer Spannungsdifferenz als Differenz zwischen dem individuellen Anlagenspannungssollwert und einer an der jeweiligen Windenergieanlage anliegenden Anlagenistspannung durch Einstellen der individuellen Anlagenblindleistung entgegengewirkt wird. Die individuelle Anlagenblindleistung kann auch durch entsprechende Vorgabe eines Anlagenblindstroms realisiert werden. Hier wird besonders vorgeschlagen, dass ein bereits oben beschriebener P-Regler als Blindleistungsregler verwendet wird, bei dem diese Spannungsdifferenz mit einem Faktor multipliziert wird, um dadurch einen Blindstrom zu berechnen, oder eine Blindleistung. Dieser Blindstrom wirkt der Spannungsdifferenz entgegen. Es muss aber kein P-Regler sein, sondern es kann auch ein anderer Regler als ein P-Regler verwendet werden, die Verwendung eines P-Reglers als Blindleistungsregler hat sich hier aber als vorteilhaft und insbesondere auch als schneller Regler erwiesen.

Über die Verwendung eines solchen Blindleistungsreglers, der über diese Spannungsdifferenz eine Blindleistung bzw. einen Blindstrom vorgibt, zusammen mit dem individuellen Einstellen des individuellen Anlagenspannungssollwertes kann somit die durch jede einzelne Windenergieanlage zu erzeugende Anlagenblindleistung individuell eingestellt werden und dadurch die gewünschte Symmetrierung erreicht werden.

Gemäß einem Aspekt wird vorgeschlagen, dass die Windenergieanlagen jeweils ihre abgegebene individuelle Anlagenblindleistung als Anlagenblindleistungsistwert erfassen und an eine zentrale Steuereinheit des Windparks übertragen, zum Verwenden in der Bestimmung aller individueller Anlagenspannungssollwerte. Vorzugsweise wird dazu vorgeschlagen, dass gleichwohl die Windenergieanlagen aber einen Blindstrom in Abhängigkeit von ihren individuellen Anlagenspannungssollwerten bestimmen.

Die von den Windenergieanlagen erfassten und übertragenen Anlagenblindleistungsistwerte werden somit in der zentralen Steuereinheit des Windparks zusammengeführt und daraus kann besonders der Mittelwert aller individuellen Anlagenblindleistungen bzw. Anlagenblindleistungsistwerte bestimmt werden. Besonders der individuelle Spannungskorrekturwert wird aus einer Mittelwertdifferenz als Differenz zwischen der jeweiligen individuellen Anlagenblindleistung und dem Mittelwert aller individuellen Anlagenblindleistungen bestimmt.

Diese Bestimmung erfolgt individuell für jede Windenergieanlage. Dabei wird jeweils die der Windenergieanlage zugeordnete individuelle Anlagenblindleistung verwendet, aber der Mittelwert aller individuellen Anlagenblindleistungen ist für jede Windenergieanlage derselbe. Daher wird auch insbesondere vorgeschlagen, dass der Mittelwert über alle individuellen Anlagenblindleistungen gebildet wird, also über die Anlagenblindleistungen aller Windenergieanlagen, einschließlich der Windenergieanlage, die jeweils betrachtet wird. Es braucht dann nur eine Mittelwertbildung durchgeführt zu werden.

Die Bestimmung der individuellen Anlagenspannungssollwerte, insbesondere der individuellen Spannungskorrekturwerte kann ebenfalls in der zentralen Steuereinheit erfolgen. Vorzugsweise erfolgt die Bestimmung der individuellen Anlagenspannungssollwerte und insbesondere der individuellen Spannungskorrekturwerte jeweils in der betreffenden Windenergieanlage. Sie kann dafür von der zentralen Steuereinheit des Windparks den Mittelwert aller individuellen Anlagenblindleistungen erhalten. Hier wurde besonders erkannt, dass insbesondere oder sogar nur das Bestimmen des Mittelwertes aller individuellen Anlagenblindleistungen zentral erfolgen sollte. Ebenso wurde erkannt, dass das Übertragen nur dieses einen Mittelwertes von der zentralen Steuereinheit des Windparks an die einzelnen Windenergieanlagen mit geringem Aufwand erfolgen kann.

Gemäß einem Aspekt wird vorgeschlagen, dass die individuelle Anlagenblindleistung jeweils berücksichtig und/oder übertragen wird als relativer, insbesondere prozentualer Wert bezogen auf eine maximal verfügbare Anlagenblindleistung der jeweiligen Windenergieanlage oder bezogen auf eine Nennblindleistung oder Nennwirkleistung der jeweiligen Windenergieanlage. Dadurch kann die Höhe der individuellen Anlagenblindleistung an die Größe der Windenergieanlage angepasst werden.

Hier wurde besonders auch erkannt, dass die Effizienz dadurch gesteigert werden kann, dass die erzeugte Blindleistung der Höhe nach an die erzeugte Wirkleistung angepasst wird. Hier liegt besonders die Erkenntnis zu Grunde, dass auch das Erzeugen von Blindleistung zumindest etwas Verlustleistung, also Verlustwirkleistung nach sich zieht und daher eine geringere Effizienz für eine Windenergieanlage folgen würde, sollte sie wenig Wirkleistung erzeugen, aber gleichzeitig viel Blindleistung erzeugen müssen. Dies wäre zwar möglich, aber nicht sehr effizient. Das kann durch die Vorgabe relativer, insbesondere prozentualer Werte vermieden werden.

Gemäß einem Aspekt wird vorgeschlagen, dass der individuelle Spannungskorrekturwert zum Bestimmen des jeweiligen individuellen Anlagenspannungssollwertes aus dem Parkspannungssollwert, durch Vorgabe einer Korrekturbegrenzung begrenzbar ist. Dazu wird vorgeschlagen, dass zur Begrenzung der individuellen Spannungskorrekturwerte die Korrekturbegrenzung so auf alle individuellen Spannungskorrekturwerte angewendet wird, dass eine Summe aller individuellen Spannungskorrekturwerte gleichbleibt, insbesondere null bleibt.

Hier wurde erkannt, dass durch die Vorgabe einer Korrekturbegrenzung die Symmetrierung begrenzt werden kann. Es wurde erkannt, dass es nicht unbedingt sinnvoll ist, eine Symmetrierung beliebig stark vorzunehmen. Eine vorgeschlagene Korrekturbegrenzung kann besonders für die folgende Situation vorteilhaft sein. Falls für individuelle Spannungssollwerte minimale und maximale Grenzen definiert sind, können diese Grenzen durch individuelle Spannungskorrekturwerte zwecks Symmetrierung bei einigen Windenergieanlagen erreicht werden. Somit kann die angestrebte Parkblindleistung nicht erreicht werden. Dieser Fall kann durch die Vorgabe einer Korrekturbegrenzung vermieden werden.

Dabei wurde weiter erkannt, dass eine Begrenzung zu einer Asymmetrie führen kann, besonders, wenn im vorliegenden Fall naturgemäß eine Begrenzung nur einige aber nicht alle Windenergieanlagen betreffen würde. Daher wird vorgeschlagen, eine Begrenzung so umzusetzen, dass eine Summe aller individueller Spannungskorrekturwerte nicht verändert wird. Vorzugsweise ist die Summe aller individuellen Spannungskorrekturwerte auch ohne Begrenzung null und daher wird vorgeschlagen, die Begrenzung so umzusetzen, dass auch nach der Begrenzung die Summe aller individuellen Spannungskorrekturwerte null ist.

Dadurch wird erreicht, dass auch bei Verwendung einer Begrenzung der Grundsatz erhalten bleibt, dass die vorgesehene Symmetrierung durch Modifizieren der individuellen Anlagenspannungssollwerte möglichst nicht die insgesamt vom Windpark abgegebene Blindleistung verändert. Dass eine Summe aller individuellen Spannungskorrekturwerte gleichbleibt, kann bspw. dadurch erreicht werden, dass diese Summe gebildet wird und dann, wenn sie sich verändert, insbesondere, wenn sie den Wert null verlässt, die individuellen Spannungskorrekturwerte so verändert werden, dass die Summe wieder auf null zurückgeführt wird.

Besonders kann dafür, dass die Summe aller individuellen Spannungskorrekturwerte gleichbleibt, der folgende Aspekt vorgeschlagen werden.

Gemäß einem Aspekt wird somit vorgeschlagen, dass im Falle einer Vorgabe der Korrekturbegrenzung und wenn wenigstens ein individueller Spannungskorrekturwert, also bevor er begrenzt wird, die Korrekturbegrenzung überschreitet, ein Begrenzungsverhältnis gebildet wird. Dieses Begrenzungsverhältnis wird als Verhältnis zwischen der Korrekturbegrenzung und einem maximalen Spannungskorrekturwert gebildet.

Der maximale Spannungskorrekturwert ist der dem Betrage nach größte Wert aller individuellen Spannungskorrekturwerte, bevor sie begrenzt werden. Das Verhältnis zwischen der Korrekturbegrenzung und dem maximalen Spannungskorrekturwert ist insbesondere als Quotient zwischen diesen beiden Werten zu verstehen, also ein Quotient der Korrekturbegrenzung geteilt durch den maximalen Spannungskorrekturwert.

Im Falle, wenn wenigstens ein individueller Spannungskorrekturwert die Korrekturbegrenzung überschreitet, überschreitet natürlich auch der maximale Spannungskorrekturwert die Korrekturbegrenzung. Der Quotient aus Korrekturbegrenzung durch diesen maximalen Spannungskorrekturwert ist somit kleiner als 1.

Weiter wird vorgeschlagen, dass jeder individuelle Spannungskorrekturwert mit dem Begrenzungsverhältnis multipliziert wird, um dadurch jeweils einen individuellen modifizierten Spannungskorrekturwert zu bilden. Dieser wird dann zum Bestimmen der jeweiligen individuellen Anlagenspannungssollwerte aus dem Parkspannungssollwert verwendet. Der Parkspannungssollwert wird also nicht mehr durch den individuellen Spannungskorrekturwert, sondern durch den individuellen modifizierten Spannungskorrekturwert modifiziert.

Hierbei liegt der Gedanke zu Grunde, dass die Multiplikation des maximalen Spannungskorrekturwertes mit dem Begrenzungsverhältnis der Korrekturbegrenzung entspricht. Der maximale Spannungskorrekturwert wird dadurch also auf die Korrekturbegrenzung begrenzt.

Alle übrigen Spannungskorrekturwerte werden durch die Multiplikation mit diesem Begrenzungsverhältnis um den gleichen Wert verändert. Dadurch wird im Ergebnis erreicht, dass die Summe aller individuellen Spannungskorrekturwerte null bleibt.

Es ist dabei zu beachten, dass positive und negative Spannungskorrekturwerte auftreten, denn nur so kann ihre Summe null werden. Bei der Multiplikation mit dem Begrenzungsverhältnis werden sämtliche Spannungskorrekturwerte dem Betrage nach verringert. Dadurch werden sowohl positive als auch negative individuelle Spannungskorrekturwerte dem Betrage nach verringert, sodass die Summe weiterhin null bleiben kann.

Gemäß einem Aspekt wird vorgeschlagen, dass im Falle des Auftretens eines Netzfehlers, insbesondere in einem FRT-, LVRT- oder OVRT-Fall an einer, einigen oder allen Windenergieanlagen eine Statik verändert wird, die einen Zusammenhang zwischen Anlagenspannungsdifferenz und einem von der jeweiligen Windenergieanlage einzuspeisenden Anlagenblindstrom vorgibt. Die Statik wird somit gegenüber einer Situation ohne Netzfehler verändert. Dadurch kann besonders eine spannungs- bzw. spannungsdifferenzabhängige Blindleistungseinspeisung in ihrer Dynamik verändert werden, um dadurch auf den Netzfehler zu reagieren.

Als Netzfehler kommt besonders eine Situation in Betracht, die als FRT-, also als Fehlerdurchschreitung (Fault Ride Through) bezeichnet werden kann. Besonders geht es um Spannungseinbrüche, also einen sog. LVRT- (Low Voltage Ride Through) Fall oder um einen Überspannungsfall, besonders einen OVRT- (Over Voltage Ride Through) Fall. Hier wird zudem vorgeschlagen, in Abhängigkeit von der Spannungsdifferenz einen Anlagenblindstrom vorzugeben.

Besonders in einem solchen Fall, in dem die Spannung ihren normalen Bereich verlässt, hat dies einen starken Einfluss auf die Blindleistung. Besonders bei einem sehr starken Spannungseinbruch kann u.U. eine gewünschte Blindleistung nicht mehr eingespeist werden, aber ein Blindstrom kann noch eingespeist werden, sodass das Vorgeben eines Blindstroms vorgeschlagen wird. Dazu kann besonders eine entsprechend angepasste, also gegenüber dem Fall ohne Netzfehler veränderte Statik verwendet werden.

Außerdem oder alternativ wird vorgeschlagen, dass im Falle des Auftretens eines Netzfehlers das Bestimmen der individuellen Anlagenblindleistung bzw. des individuellen Anlagenblindstroms an einer, einigen oder allen Windenergieanlagen in ein vereinfachtes Alternativverfahren geändert wird. Hier wurde besonders erkannt, dass die vorgeschlagene Symmetrierung in einem solchen Netzfehlerfall ausgesetzt werden kann. Hier wurde zum einen erkannt, dass die Symmetrierung in einem Netzfehlerfall weniger wichtig ist. Zum anderen wurde erkannt, dass in einem Netzfehlerfall die Blindleistungsvorgabe nicht mehr von einer von extern vorgegebenen Blindleistungseinspeisung abhängt. Vielmehr wird dann auf das Spannungsverhalten des elektrischen Versorgungsnetzes direkt und unmittelbar reagiert.

Insbesondere wird vorgeschlagen, dass jeweils die betreffende Windenergieanlage einen individuellen Anlagenblindstrom in Abhängigkeit von der erfassten an der jeweiligen Windenergieanlage anliegenden Anlagenistspannung und einen fest vorgegebenen Spannungssollwert bestimmt. Insbesondere bestimmt die betreffende Windenergieanlage den Blindstrom in Abhängigkeit von einer Anlagenspannungsdifferenz als Differenz zwischen der Anlagenistspannung und diesen fest vorgegebenen Spannungssollwert.

Das vereinfachte Alternativverfahren ist somit ein Verfahren, das temporär ohne die vorgeschlagene Symmetrierung der Blindleistung im Windpark auskommt, Es kann nur unter Verwendung einer Statik für jede Windenergieanlage arbeiten. Die jeweils an der Windenergieanlage verwendete Statik beschreibt besonders einen vorgegebenen Zusammenhang zwischen einer Spannungsabweichung an der Windenergieanlage, nämlich eine Abweichung der Spannung an der Windenergieanlage von einem Spannungsreferenzwert, insbesondere einer Nennspannung. Diese Statik, also dieser Zusammenhang kann aber auch komplexer sein, bspw. Stufen aufweisen, sodass der Zusammenhang bspw. in unterschiedlichen Bereichen der Spannungsabweichung unterschiedliche Steigungen aufweist.

Außerdem oder alternativ wird vorgeschlagen, dass jeweils die betreffende Windenergieanlage einen individuellen Anlagenblindstrom in Abhängigkeit von einem von der betreffenden Windenergieanlage vor dem Auftreten des Netzfehlers eingespeisten Blindstrom bestimmt. Dadurch kann ebenfalls ein vereinfachtes Verfahren bereitgestellt werden.

Außerdem oder alternativ wird vorgeschlagen, dass das vereinfachte Alternativverfahren eine veränderte Statik verwendet, die einen Zusammenhang zwischen einer bzw. der Spannungsdifferenz und dem individuellen Anlagenblindstrom angibt. Diese Statik ist im Vergleich zum Steuern jeder Windenergieanlage ohne das vereinfachte Alternativverfahren verändert. Besonders ist eine steilere Statik für das vereinfachte Alternativverfahren vorgesehen, also eine Statik mit größerer Steigung, also größerem Verstärkungsfaktor zwischen Anlagenspannungsdifferenz und Blindstrom.

Hier wurde zudem erkannt, dass im Falle eines Netzfehlers auch Kommunikationswege innerhalb des Windparks, insbesondere zwischen einzelnen Windenergieanlagen und einer zentralen Parksteuerung, gestört sein können. Dazu kann der fest vorgegebene Spannungssollwert verwendet werden, der in jeder Windenergieanlage hinterlegt sein kann. Das ist das Alternativverfahren, bzw. Teil des Alternativverfahrens. Somit wird besonders vorgeschlagen, dass in diesem Netzfehlerfall die Windenergieanlagen im Grunde selbstständig und/oder autark arbeiten.

Insbesondere wird vorgeschlagen, dass für die Windenergieanlagen, die zum vereinfachten Alternativverfahren wechseln, das Bestimmen eines individuellen Anlagenspannungssollwertes eingefroren wird, bis der Netzfehler beendet ist und/oder bis die Windenergieanlagen das vereinfachte Alternativverfahren wieder verlassen haben.

Insbesondere wird vorgesehen, dass bei Verwendung eines Reglers mit integralem Anteil der integrale Anteil eingefroren wird. Insbesondere ist ein solches Einfrieren für einen Regler vorgesehen, der jeweils zum Berechnen eines individuellen Spannungskorrekturwertes verwendet wird. Er kann einen PI-Regler enthalten bzw. ein PI-Regler sein, und für ihn wurde festgestellt, dass es von Vorteil ist, im Netzfehlerfall, wenn dieser Regler dann nicht mehr verwendet wird, sein integraler Anteil eingefroren wird. Er hält also seine Ausgangswerte und ignoriert für diesen Zeitraum des Einfrierens seiner Eingangswerte. Sobald der Netzfehler vorüber ist, kann der Regler zur Bestimmung des individuellen Spannungskorrekturwertes seine Arbeit wie vor dem Netzfehler fortsetzen.

Als Kriterium, wie lange eingefroren wird, kann die Dauer des Netzfehlers berücksichtigt werden, oder alternativ oder zusätzlich, ob die Windenergieanlage das vereinfachte Verfahren wieder verlassen hat. Dieses ist regelmäßig auch ein Indikator für das Ende des Netzfehlers. Wenn beide Kriterien zugleich betrachtet werden, sollte das Einfrieren beendet werden, wenn beide Kriterien erfüllt sind.

Gemäß einem Aspekt wird vorgeschlagen, dass im Falle des Auftretens eines Netzfehlers, insbesondere in einem FRT-, LVRT- oder OVRT-Fall, wenn das Bestimmen der individuellen Anlagenleistung an einer oder einigen, aber nicht an allen Windenergieanlagen in ein vereinfachtes Alternativverfahren geändert wird, das Bestimmen der individuellen Anlagenspannungssollwerte für die übrigen Windenergieanlagen fortgesetzt wird, also für die Windenergieanlagen fortgesetzt wird, an denen nicht in das vereinfachte Alternativverfahren gewechselt wurde.

Dazu wird vorgeschlagen, dass zur Bestimmung der individuellen Anlagenspannungssollwerte eine Summe aller eingespeisten Blindleistungen von nur den Windenergieanlagen verwendet wird, an denen nicht in das vereinfachte Alternativerfahren geändert wurde. Somit wird hier vorgeschlagen, dass die Symmetrierung an den verbleibenden Windenergieanlagen fortgesetzt wird, wenn nur einige der Windenergieanlagen von dem Netzfehlerfall betroffen sind.

Gemäß einem Aspekt wird vorgeschlagen, dass ein Korrekturregler zum Bestimmen des individuellen Spannungskorrekturwertes aus der Mittelwertdifferenz als Differenz zwischen der jeweiligen individuellen Anlagenblindleistung und einem Mittelwert aller individuellen Anlagenblindleistungen, jeweils so parametriert wird, dass er ähnlich schnell oder schneller als ein Parkregler zum Bestimmen des Parkspannungssollwertes ist, und/oder dass der Korrekturregler eine Regelungszeitkonstante aufweist, die maximal doppelt so groß wie eine Regelungszeitkonstante des Parkreglers ist, insbesondere kleiner als eine Regelungszeitkonstante des Parkreglers ist.

Hier wurde besonders erkannt, dass der Spannungskorrekturwert über einen Korrekturregler bestimmt werden kann. Der Korrekturregler kann insbesondere als PI-Regler ausgebildet sein. Dadurch weist er eine Dynamik auf, die möglichst in keinem Konflikt zu der Dynamik des Parkreglers stehen sollte, der den Parkspannungssollwert bestimmt, nämlich aus dem Parkblindleistungssollwert und einem bzw. dem Parkblindleistungsistwert. Ein solcher Parkregler kann ebenfalls ein PI-Regler sein, um eine stationäre Genauigkeit für die Parkblindleistung zu erreichen, um also den Parkblindleistungsistwert an den Parkleistungssollwert heranzuführen.

Um einen solchen Konflikt zwischen beiden Dynamiken der beiden Regler zu vermeiden, wurde besonders erkannt, dass der Korrekturregler nicht signifikant langsamer als der Parkregler sein sollte. Daher wird vorgeschlagen, den Korrekturregler entsprechend schnell zu wählen und das kann über die Festlegung der Regelungszeitkonstante erfolgen. Je kleiner sie ist, umso schneller ist der entsprechende Regler.

Es wurde erkannt, dass er etwas langsamer als der Parkregler sein dürfte, sodass eine doppelte Regelungszeitkonstante noch zulässig wäre. Vorzugsweise ist die Regelungszeitkonstante des Korrekturreglers aber kleiner zu wählen als die Regelungszeitkonstante des Parkreglers. Dazu wurde besonders auch erkannt, dass sich eine Gesamtstruktur ergibt, bei der der Korrekturregler zu dem Parkregler eine innere Kaskade bilden kann, die vorzugsweise eine schnellere Regeldynamik als die äußere Kaskade haben sollte.

Erfindungsgemäß wird auch ein Windpark vorgeschlagen. Der Windpark ist zum Bereitstellen einer Parkblindleistung durch mehrere Windenergieanlagen des Windparks vorbereitet, wobei der Windpark eine Steuerung aufweist, die dazu vorbereitet ist, ein Verfahren mit den folgenden Schritten auszuführen:

- Empfangen eines Parkblindleistungssollwertes als Vorgabe einer durch den Windpark einzuspeisenden Parkblindleistung,

- Bestimmen eines Parkspannungssollwertes als gemeinsamen Spannungssollwert für alle Windenergieanlagen in Abhängigkeit von dem Parkblindleistungssollwert,

- Bestimmen eines individuellen Anlagenspannungssollwertes jeweils für eine der Windenergieanlagen in Abhängigkeit von dem Parkspannungssollwert,

- Bestimmen und Abgeben einer individuellen Anlagenblindleistung jeweils durch eine der Windenergieanlagen in Abhängigkeit von einer Anlagenspannungsdifferenz als Differenz zwischen einer Anlagenistspannung und dem individuellen Anlagenspannungssollwert der jeweiligen Windenergieanlage und wobei

- der individuelle Anlagenspannungssollwert jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt wird.

Besonders kann der Windpark dadurch zum Ausführen des Verfahrens vorbereitet sein, dass entsprechende Steuereinheiten vorgesehen sind, auf denen das Verfahren implementiert ist. Insbesondere ist eine zentrale Parksteuerung vorgesehen zum Empfangen des Parkblindleistungssollwertes und zum Bestimmen des Parkspannungssollwertes. Das Bestimmen eines individuellen Anlagenspannungssollwertes und das Bestimmen einer individuellen Anlagenblindleistung erfolgt vorzugsweise jeweils in einer Anlagensteuerung der jeweiligen Windenergieanlage.

In einer solchen Anlagensteuerung sind jeweils die entsprechenden Verfahrensschritte dafür implementiert. Die Berücksichtigung einiger, mehrerer oder aller individuellen Anlagenblindleistungen der Windenergieanlagen des Windparks kann mithilfe der zentralen Parksteuerung vorgesehen sein. Insbesondere kann die zentrale Parksteuerung eine Mittelwertbildung aller Anlagenblindleistungen der Windenergieanlagen des Windparks vornehmen. Ein solcher Mittelwert kann dann zur weiteren Verwendung von der zentralen Parksteuerung an die einzelnen Anlagensteuerungen übermittelt werden. Die zentrale Parksteuerung kann Schnittstellen zum Empfangen von Anlagenblindleistungsistwerten aufweisen, um aus diesen Anlagenblindleistungsistwerten den Mittelwert aller Anlagenblindleistungen zu bestimmen.

Es kommt aber auch in Betracht, dass selbst die individuellen Anlagenspannungssollwerte in der zentralen Parksteuerung berechnet und an die einzelnen Windenergieanlagen übergeben werden. Zur Bestimmung der jeweiligen Anlagenblindleistung kann jede Windenergieanlage für sich arbeiten und dafür den individuellen Anlagenspannungssollwert verwenden sowie eine an der jeweiligen Windenergieanlage gemessene Anlagenistspannung.

Die Steuerung des Windparks ist somit insbesondere als verteilte Steuereinrichtung zu verstehen und die Steuerung des Windparks kann auch synonym als Steuereinrichtung bezeichnet werden. Diese Steuereinrichtung wird insbesondere durch die zentrale Parksteuerung und mehrere Anlagensteuerungen gebildet, wobei die Anlagensteuerungen jeweils an einer Windenergieanlage angeordnet sind und über eine Kommunikationsverbindung mit der zentralen Parksteuerung verbunden sind. Insbesondere wird vorgeschlagen, dass die zentrale Parksteuerung und die Anlagensteuerungen zur Kommunikation über ein Bussystem miteinander verbunden sind.

Gemäß einem Aspekt wird vorgeschlagen, dass der Windpark die zentrale Parksteuereinheit und mehrere Anlagensteuerungen aufweist, wobei jeweils eine der Anlagensteuerungen an jeweils einer Windenergieanlage angeordnet ist, die Anlagensteuerungen mit der Parksteuereinheit über ein Kommunikationssystem verbunden sind, insbesondere über ein Datenbussystem, und ein Verfahren zum Bereitstellen der Parkblindleistung auf der zentralen Parksteuereinheit und den mehreren Anlagensteuerungen implementiert ist.

Hier wurde besonders erkannt, dass das Verfahren zum Bereitstellen der Parkblindleistung teilweise an einer zentralen Stelle und teilweise an den Anlagen auszuführen ist, sodass die Verwendung der zentralen Parksteuereinheit und der mehreren Anlagensteuerungen vorgeschlagen wird.

Gemäß einem Aspekt wird vorgeschlagen, dass der Windpark dazu vorbereitet ist, ein Verfahren gemäß einer der vorstehend erläuterten Ausführungsformen auszuführen und/oder dass ein Verfahren gemäß einem der vorstehenden Ausführungsformen in der zentralen Parksteuereinheit und den mehreren Anlagensteuerungen implementiert ist. Dadurch kann ein so aufgebauter Windpark die Vorteile des Verfahrens gemäß den beschriebenen Aspekten ausnutzen.

Die Erfindung wird nun nachfolgend anhand von Ausführungsformen beispielhaft unter Bezugnahme auf die begleitenden Figuren näher erläutert.

Figur 1    zeigt eine Windenergieanlage in einer perspektivischen und schematischen Ansicht.

Figur 2    zeigt einen Windpark in einer schematischen Darstellung.

Figur 3    zeigt schematisch mit Darstellung nur einer Windenergieanlage eine Blindleistungssteuerung in einem Windpark.

Figur 4    veranschaulicht an zwei Zeitdiagrammen die Dynamik einer Blindleistungseinspeisung basierend auf einer vorgegebenen Parkspannung.

Figur 5    zeigt schematisch eine Blindleistungssteuerung in einem Windpark, ähnlich wie Figur 3, aber mit exemplarisch zwei dargestellten Windenergieanlagen.

Figur 6    zeigt ein veranschaulichendes Zeitdiagramm zum Erläutern von Problemen, die durch eine Blindleistungssteuerung gemäß der Struktur der Figur 5 auftreten können.

Figur 7    zeigt ein weiteres Zeitdiagramm zur Veranschaulichung von einem weiteren Problem, das durch die Blindleistungssteuerung gemäß der Struktur der Figur 5 auftreten kann.

Figur 8    zeigt schematisch eine Struktur zur Blindleistungssteuerung in einem Windpark zur Symmetrierung der Blindleistung der einzelnen Windenergieanlagen.

Figur 9    zeigt eine gegenüber Figur 8 erweiterte Struktur.

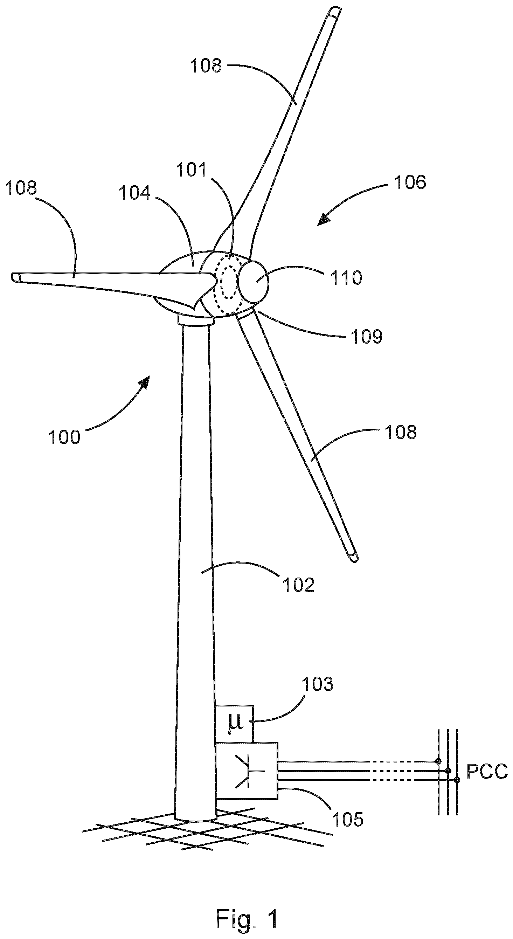

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.]

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

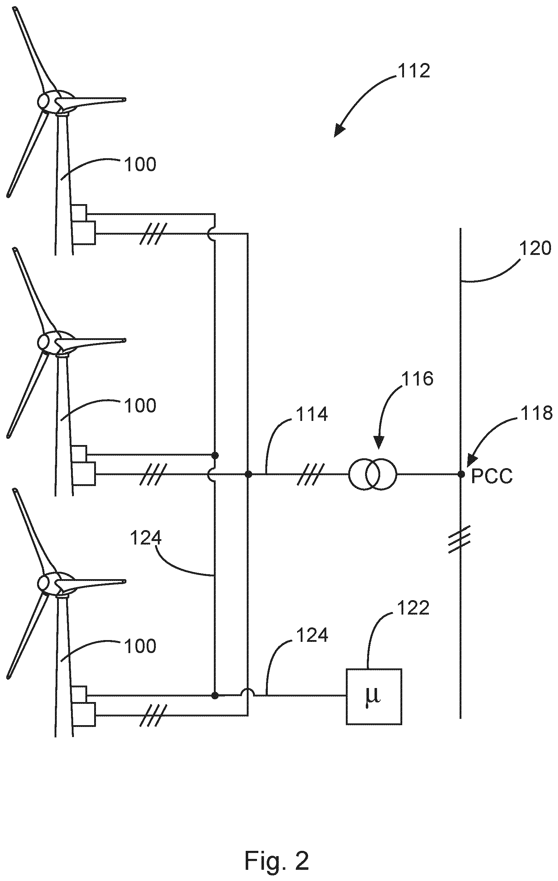

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung oder zentrale Parksteuereinheit bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

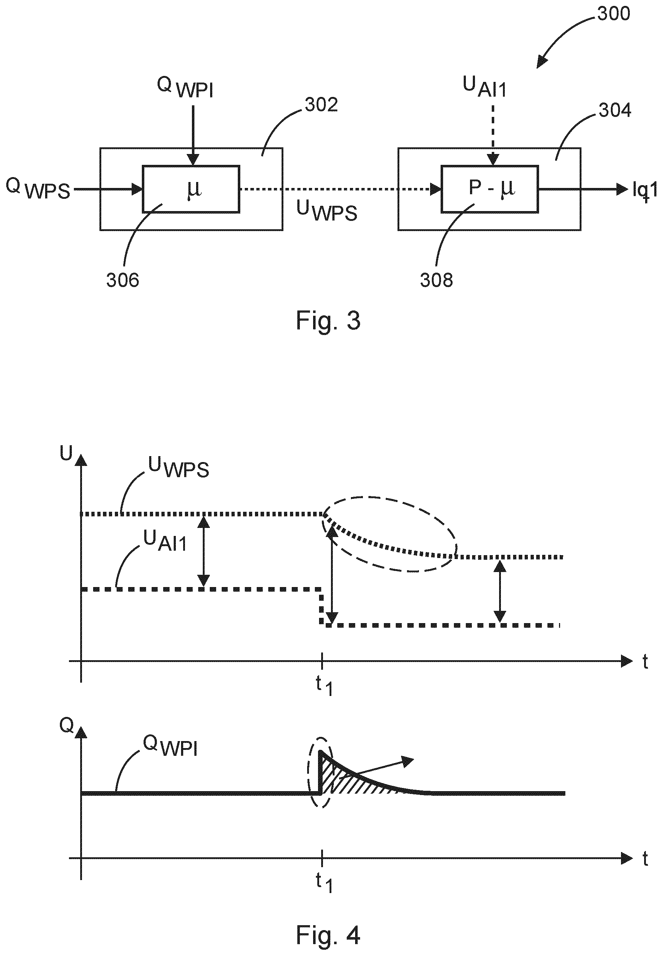

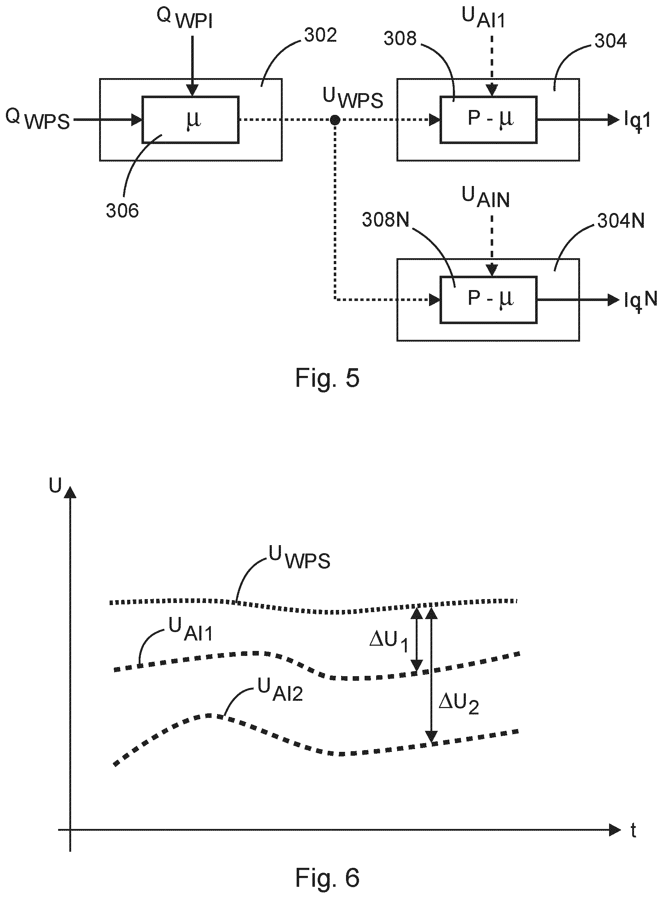

Figur 3 zeigt schematisch eine Steuerungsstruktur 300 eines Windparks, die besonders zur Veranschaulichung eine Interaktion zwischen einer zentralen Parksteuerung 302 und einer Windenergieanlage 304 veranschaulichen soll. Insoweit ist für diese Veranschaulichung nur eine Windenergieanlage 304 dargestellt, wobei in einem Windpark natürlich mehrere Windenergieanlagen vorhanden sind. Darauf wird auch noch im Zusammenhang mit Figur 5 eingegangen.

Jedenfalls ist die zentrale Parksteuerung 302 generell zum Steuern des Windparks vorgesehen, was diverse Interaktionen einschließlich Informationsaustausch mit den einzelnen Windenergieanlagen des Windparks beinhaltet. U.a. ist ein Parkblindleistungsregler 306 in dieser zentralen Parksteuerung 302 enthalten. Dieser Parkblindleistungsregler 306 erhält einen Parkblindleistungssollwert $Q_{WPS}$. Dieser kann auch mehrere Sollwerte enthalten, die z.B. für unterschiedliche Zeitfenster vorgesehen sind.

Der Parkblindleistungsregler 306 erhält dazu zusätzlich den Parkblindleistungsistwert $Q_{WPI}$. Dieser kann mehrere Werte enthalten, besonders jeweils den aktuellen Blindleistungswert, den der Windpark an das elektrische Versorgungsnetz abgibt.

Aus dem Parkblindleistungssollwert $Q_{WPS}$ und dem Parkblindleistungsistwert $Q_{WPI}$ bestimmt der Parkblindleistungsregler 306 einen Parkspannungssollwert $U_{WPS}$. Dieser Parkspannungssollwert $U_{WPS}$ kann auch als Spannungssollwert für die Windenergieanlagen verstanden werden, da er für diese Windenergieanlagen einen Sollwert vorgibt. Da dieser Parkspannungssollwert $U_{WPS}$ aber für alle Windenergieanlagen gleich ist und insoweit in jedem Windpark nur ein solcher Wert zurzeit vorhanden ist, wird er hier als Parkspannungssollwert $U_{WPS}$ bezeichnet.

Der Parkspannungssollwert $U_{WPS}$ wird dann zur Umsetzung jeweils an einen Anlagenblindleistungsregler 308 gegeben. Dieser Anlagenblindleistungsregler 308 kann somit Teil der Windenergieanlage 304 sein. Er kann auch grundsätzlich Teil einer Anlagensteuerung der Windenergieanlage 304 sein.

Jedenfalls erhält der Anlagenblindleistungsregler 308 neben dem Parkspannungssollwert $U_{WPS}$ auch einen Wert einer Anlagenspannung $U_{AI1}$, wobei der Index 1 anzeigt, dass diese Anlagenistspannung zur ersten Windenergieanlage gehört, die nämlich in Figur 3 als Windenergieanlage 308 gezeigt ist. Der Anlagenblindleistungsregler 308 bestimmt in Abhängigkeit von diesen Eingangswerten einen Anlagenblindstrom $I_{q1}$. Der Index 1 gibt lediglich an, dass dieser Anlagenblindstrom zur ersten Anlage gehört, wobei angenommen wird, dass die in Figur 3 dargestellte Windenergieanlage 308 die erste Windenergieanlage oder die Windenergieanlage 1 ist.

Als Anlagenblindleistungsregler 308 ist insbesondere ein Proportionalregler vorgesehen, sodass sich der Anlagenblindstrom $I_{q1}$ mit folgender Formel berechnet, wobei K ein Proportionalitätsfaktor ist, der als Reglerverstärkung vorgebbar ist:

$$I_{q1} = K(U_{WPS} - U_{AI1})$$

Eine Änderung der Anlagenistspannung $U_{AI1}$ wirkt sich also sofort auf den Anlagenblindstrom $I_{q1}$ aus. Ein Sprung in den Eingangsgrößen führt also auch zu einem Sprung in dem Anlagenblindstrom $I_{q1}$. Da der Anlagenblindleistungsregler 308 als P-Regler ausgebildet ist, kann er keine stationäre Genauigkeit erzielen.

Eine stationäre Genauigkeit kann aber mit dem Parkblindleistungsregler 306 erzielt werden, denn er kann als PI-Regler ausgebildet sein.

Figur 4 veranschaulicht für die Konstellation gemäß Figur 3 das dynamische Verhalten im Falle eines Spannungssprungs, hier negativ, der Anlagenistspannung $U_{AI1}$. Dazu zeigt das obere Diagramm einen zeitlichen Verlauf des Parkspannungssollwertes $U_{WPS}$ sowie den Verlauf einer Anlagenistspannung $U_{AI1}$. Zum Zeitpunkt $t_1$ wird von einem sprunghaften Abfall der Anlagenistspannung $U_{AI1}$ ausgegangen. Das kann besonders durch ein entsprechendes Netzereignis ausgelöst sein, was hier nicht weiter thematisiert wird.

Jedenfalls wird zu diesem oberen Spannungsdiagramm ein Blindleistungsdiagramm dargestellt. Dieses Blindleistungsdiagramm zeigt somit den Parkblindleistungsistwert $Q_{WPI}$. Für diesen Parkblindleistungsistwert wird angenommen, dass dieser am Ausgang des Windparks erfasst wird und es wird davon ausgegangen, dass ausgehend von Figur 3 diverse weitere Windenergieanlagen wie die Windenergieanlage 308 vorliegen, die alle auf die gleiche Art und Weise gesteuert werden und auch einen ganz gleichen P-Regler zur Erzeugung des Anlagenblindstroms aufweisen.

In dem Fall führt der Spannungseinbruch der Anlagenistspannung $U_{AI1}$, der in diesem Sinne auch bei den übrigen Windenergieanlagen angenommen wird, zu einem Sprung des Anlagenblindstroms und damit zu einem Sprung aller Anlagenblindströme und damit zu einem Sprung der Parkblindleistung, also dem Parkblindleistungsistwert.

Erst dieser sprunghafte Anstieg des Parkblindleistungsistwertes, der in dem unteren Diagramm gestrichelt eingekreist ist, führt dann dazu, dass der Parkblindleistungsregler 306 gemäß Figur 3 den Parkspannungssollwert $U_{WPS}$ anpasst. Da der Parkblindleistungsregler 306 dazu als PI-Regler ausgebildet sein kann, ergibt sich die dargestellte langsame Dynamik, mit der der Parkspannungssollwert ab dem Zeitpunkt $t_1$ mit der dargestellten Dynamik abfällt, die im oberen Diagramm gestrichelt eingekreist ist. Dies erfolgt so lange, bis sich wieder derselbe Spannungsabstand zwischen dem Parkspannungssollwert $U_{WPS}$ und der Anlagenistspannung $U_{AI1}$ wie vor dem Spannungseinbruch bei $t_1$ ergibt. Bis dahin ist dann auch entsprechend der Parkblindleistungsistwert $Q_{WPI}$ wieder auf den Wert vor dem Ereignis zum Zeitpunkt $t_1$ abgefallen.

So kann also die Parkblindleistung auf ihren Sollwert ausgeregelt werden.

Figur 5 geht von demselben Schema wie Figur 3 aus, hat zur Veranschaulichung der Aufteilung der Blindleistungserzeugung im Windpark auf die einzelnen Windenergieanlagen allerdings eine weitere Windenergieanlage 308N gezeigt. Sie steht repräsentativ dafür, dass N-Anlagen in dem Windpark vorhanden sind. Figur 5 zeigt insoweit nur schematisch quasi die erste und letzte Windenergieanlage des Windparks.

Figur 5 zeigt somit eine weitere Windenergieanlage 304N mit einem weiteren, zugehörigen Anlagenblindleistungsregler 308N. Entsprechend erhält zur Windenergieanlage 304N der Anlagenblindleistungsregler 308N den Anlagenspannungsistwert $U_{AIN}$ und bestimmt den Anlagenblindstromwert $I_{qN}$. Der Einfachheit halber werden für Figur 5 und Figur 3 dieselben Bezugszeichen verwendet und insoweit gelten die Erläuterungen zu Figur 3 auch zu Figur 5.

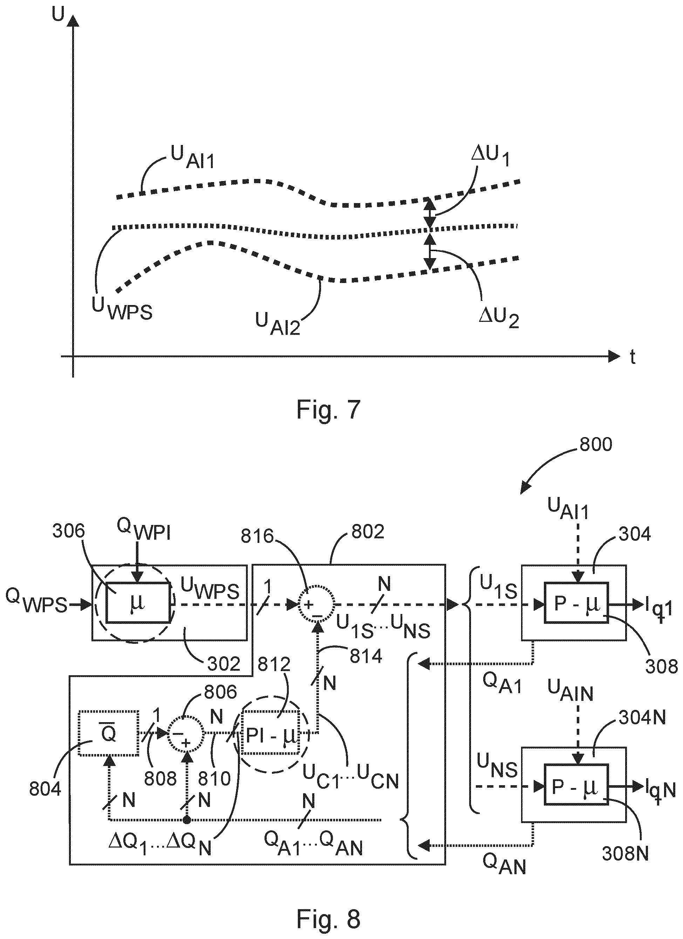

Figur 5 soll besonders veranschaulichen, dass die Windenergieanlagen 308 und 308N denselben Parkspannungssollwert $U_{WPS}$ erhalten. Daraus können die folgenden Situationen entstehen, die in den Figuren 6 und 7 erläutert werden.

Figur 6 zeigt ein Zeitdiagramm für einen Parkspannungssollwert $U_{WPS}$, wie er in den Strukturen der Figuren 3 und 5 vorgegeben wird, zusammen mit den beiden Anlagenistspannungen $U_{AI1}$ und $U_{AI2}$. Beide Anlagenistspannungen $U_{AI1}$ und $U_{AI2}$ sind die Anlagenistspannungen zweier repräsentativer Windenergieanlagen. Im einfachsten Fall kann zur Veranschaulichung angenommen werden, dass dies den beiden Windenergieanlagen 304 und 304N der Figur 5 entspricht.

Das Diagramm der Figur 6 veranschaulicht somit, dass unterschiedliche Anlagenistspannungen $U_{AI1}$ bzw. $U_{AI2}$ zu unterschiedlichen Differenzspannungen $\Delta U$, und $\Delta U_2$ und damit bei gleich parametrierten Anlagenblindleistungsreglern zu entsprechend unterschiedlichen Blindleistungen führen, die jeweils von der betreffenden Windenergieanlage zu erzeugen ist. Es ergibt sich also eine Ungleichverteilung der von den einzelnen Windenergieanlagen zu erzeugenden Blindleistungen.

Dabei können die unterschiedlichen Spannungshöhen der beispielhaft genannten Anlagenistspannungen $U_{AI1}$ und $U_{AI2}$ bspw. durch unterschiedliche Leitungsimpedanzen zwischen der betreffenden Windenergieanlage und einem gemeinsamen Netzanschlusspunkt des Windparks hervorgerufen sein. Die unterschiedlichen Leitungsimpedanzen können sich aus unterschiedlichen Abständen der jeweiligen Windenergieanlagen von diesem gemeinsamen Netzanschlusspunkt ergeben.

Figur 7 zeigt im Grunde das gleiche Diagramm wie Figur 6, sodass auch dieselben Bezeichnungen verwendet werden. Das Diagramm der Figur 7 veranschaulicht einen Fall, bei dem der Parkspannungssollwert $U_{WPS}$ zwischen den beiden Anlagenistspannungen $U_{AI1}$ bzw. $U_{AI2}$ liegt. Das führt dann bei einer Steuerung gemäß Figur 5 dazu, dass an der einen Windenergieanlage eine negative und an der anderen eine positive Spannungsdifferenz $\Delta U_1$ bzw. $\Delta U_2$ auftritt, sodass die eine Windenergieanlage - vereinfacht ausgedrückt - negative Blindleistung und die andere positive Blindleistung beisteuert, also eine kapazitive Blindleistung und eine induktive Blindleistung. Die beiden Windenergieanlagen arbeiten also quasi gegeneinander.

Effizienter wäre es in diesem beispielhaften vereinfachten Fall, wenn beide Windenergieanlagen (fast) in der gezeigten Situation gar keine Blindleistung erzeugen würden, statt, dass beide Windenergieanlagen Blindleistung gleicher oder ähnlicher Höhe nur mit unterschiedlichem Vorzeichen erzeugen. Durch die vorgeschlagene Lösung, den Anlagenspannungssollwert anzupassen, insbesondere durch den Spannungskorrekturwert, kann eine solche Situation vermieden werden, zumindest verringert werden. Das gilt auch für die in Figur 6 beschriebene Situation.

Figur 8 zeigt schematisch eine Parkblindleistungssteuerung 800 mit einer vorgeschlagenen Steuerungsstruktur zum Aufteilen, insbesondere Vergleichmäßigen oder Symmetrieren der einzelnen Anlagenblindleistungen.

Ein Vorteil der in Figur 8 gezeigten Lösung besteht darin, dass eine Modifizierungssteuerstruktur 802 ergänzt wird, die ansonsten auf bekannten Strukturen, Reglern und Steuerungen aufsetzt.

Insbesondere kann eine zentrale Parksteuerung 302 mit einem Parkblindleistungsregler 306 unverändert weiterverwendet werden, wie in den Figuren 3 und 5 dargestellt. Entsprechend werden hier, selbst wenn Unterschiede vorhanden sein können, dieselben Bezugszeichen verwendet. Auch die Windenergieanlagen 304 und 304N mit dem Anlagenblindleistungsregler 308 bzw. 308N können denen der Figuren 3 bzw. 5 entsprechen. Insoweit werden auch für die Windenergieanlagen 304 und 304N dieselben Bezugszeichen wie in Figur 3 bzw. Figur 5 verwendet, selbst wenn Unterschiede vorhanden sein sollten.

Ein Unterschied ist dabei in Figur 8 dargestellt, demnach jede Windenergieanlage 308 bzw. 308N eine Anlagenblindleistung $Q_{A1}$ bzw. $Q_{AN}$ als Signal zur Verwendung in der Modifizierungssteuerstruktur 802 abgeben. Die beiden Anlagenblindleistungen $Q_{A1}$ und. $Q_{AN}$ sind insoweit nur repräsentativ für N, also mehrere Anlagenblindleistungen von N, also mehrere Windenergieanlagen. Mit anderen Worten ist zur Veranschaulichung nur die erste und N-te Windenergieanlage dargestellte.

Diese N Anlagenblindleistungen $Q_{A1}$ bis $Q_{AN}$ werden dann an die Modifizierungssteuerstruktur 802 übergeben und sind dann in einem N-gestrichenen Signalpfad zusammengefasst. Alle Signalpfade, die mit N gekennzeichnet sind, stehen somit repräsentativ für N einzelne Signalpfade. Entsprechende Regler oder andere funktionale Elemente, die mit einem solchen N-Signalpfad zusammenwirken, können ebenfalls als N-Elemente betrachtet werden.

Jedenfalls ist vorgesehen, dass von diesen N Anlagenblindleistungen $Q_{A1}$ bis $Q_{AN}$ in dem Mittelwertblock 804 ein Mittelwert gebildet wird und an die erste Summierstelle 806 übertragen wird.

An der ersten Summierstelle 806 wird für jede der N Anlagenblindleistungen $Q_{A1}$ bis. $Q_{AN}$ eine Differenz gebildet, bei der jeweils der erzeugte Blindleistungsmittelwert 808 von jeder Anlagenblindleistung $Q_{A1}$ bis $Q_{AN}$ abgezogen wird. Insoweit steht die erste Summierstelle 806 tatsächlich für N einzelne Summierstellen. Jedenfalls ist das Ergebnis eine Mittelwertdifferenz $\Delta Q$, bis $\Delta Q_N$. Diese N Blindleistungsmittelwertdifferenzen sind somit in dem Mittelwertdifferenzpfad 810 zusammengefasst und werden an einen Spannungskorrekturregler 812 gegeben. Der Spannungskorrekturregler 812 steht somit auch repräsentativ für N Regler, denn jede der N Mittelwertdifferenzen, die über den Mittelwertdifferenzpfad 810 zugeführt werden, werden jeweils einem einzelnen Regler zugeführt. Gleichwohl sind diese N Regler des Spannungskorrekturreglers 812 in Aufbau und Parametrierung gleich.

Jeder Regler des Spannungskorrekturreglers 812 ist hier als PI-Regler aufgebaut, der vorzugsweise eine Begrenzung des Integralteils aufweisen kann.

Das Ergebnis des Spannungskorrekturreglers 812 sind N Spannungskorrekturwerte $U_{C1}$ bis $U_{CN}$. Diese N Spannungskorrekturwerte werden über den Spannungskorrekturpfad 814 an die zweite Summierstelle 816 gegeben.

Die zweite Summierstelle 816 besteht ebenfalls aus N einzelnen Summierstellen. In jeder Summierstelle wird jeweils von dem Parkspannungssollwert $U_{WPS}$ jeweils einer der Spannungskorrekturwerte $U_{C1}$ bis $U_{CN}$ abgezogen. Das Ergebnis ist somit N individuelle Anlagenspannungssollwerte $U_{1S}$ bis $U_{NS}$, die dann entsprechend jeweils an die Windenergieanlagen 304 bis 304N bzw. die Anlagenblindleistungsregler 308 bis 308N gegeben werden.

Dadurch erhält jede Windenergieanlage ihren individuellen Anlagenspannungssollwert. Die einzelnen Windenergieanlagen können dadurch wie bisher betrieben werden und wie bisher einen Blindstrom in Abhängigkeit von einem Anlagenspannungssollwert bestimmen. Lediglich wurde der Anlagenspannungssollwert, der bisher für alle Windenergieanlagen identisch war, individualisiert. Das erfolgte dadurch, dass mittels der Modifizierungssteuerstruktur 802 der Anlagenspannungssollwert $U_{WPS}$ in individuelle Anlagenspannungssollwerte aufgeteilt wurde.

Die Aufteilung erfolgt so, dass jeweils berücksichtigt wird, wieviel Blindleistung jede einzelne Windenergieanlage erzeugt. Dieser Wert wird an der ersten Summierstelle 806 zum Blindleistungsmittelwert aller Anlagenblindleistungen ins Verhältnis gesetzt und vereinfachend ausgedrückt wird die Differenz zum Blindleistungsmittelwert jeweils ausgeregelt. Dafür bestimmt die erste Summierstelle quasi für jede Windenergieanlage eine Regelabweichung der jeweiligen Anlagenblindleistung, denn der Blindleistungsmittelwert kann veranschaulichend auch als Blindleistungssollwert für jede Windenergieanlage verstanden werden.

Das Ausregeln erfolgt durch den Spannungskorrekturregler 812, der für jede Windenergieanlage einen Spannungskorrekturwert $U_{C1}$ bis $U_{CN}$ ausgibt, der im Grunde als Stellgröße verstanden werden kann.

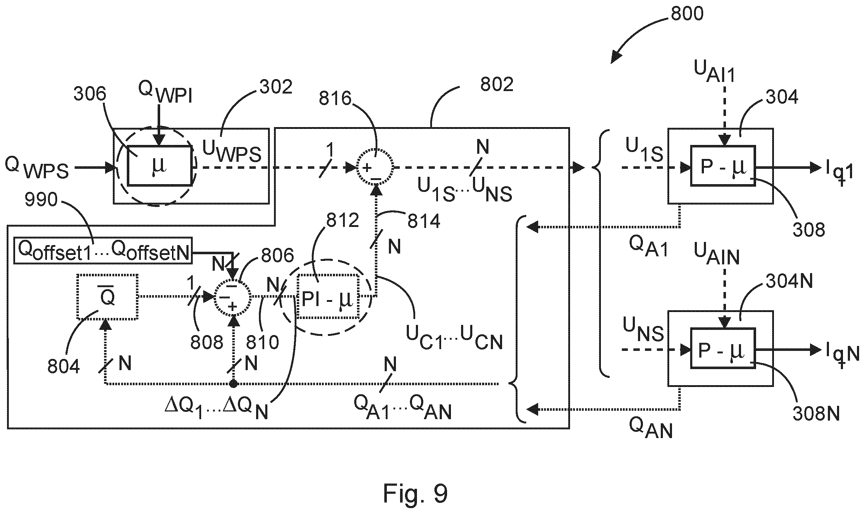

Figur 9 zeigt schematisch eine Parkblindleistungssteuerung 800 mit einer vorgeschlagenen Steuerungsstruktur zum Aufteilen, insbesondere Vergleichmäßigen oder Symmetrieren der einzelnen Anlagenblindleistungen. Die Figur ist ähnlich der Figur 8 und daher werden der besseren Übersichtlichkeit halber dieselben Bezugszeichen aus Figur 8 auch in Figur 9 übernommen.

Im Wesentlichen ist zu der Parkblindleistungssteuerung 800 ein Anlagenoffset-Block 990 hinzugekommen, der Anlagenoffsets $Q_{offset1}$ bis $Q_{offsetN}$ an der ersten Summierstelle 806 abziehen kann. Dadurch werden individuelle Anlagenoffsets jeweils von der entsprechenden Mittelwertdifferenz $\Delta Q_1$ bis $\Delta Q_N$ abgezogen, bzw. führt zu entsprechend veränderten Mittelwertdifferenzen $\Delta Q_1$ bis $\Delta Q_N$.

Es wird also vorgeschlagen, durch das Aufsummieren eines Satzes von Offset-Werten, also individuellen Anlagenoffsets $Q_{offset1}$ bis $Q_{offsetN}$, wie es in der Figur 9 durch den Anlagenoffset-Block 990 dargestellt ist, die Aufteilung der Parkblindleistungssollwerte zwischen den Windenergieanlagen zu weiteren Optimierungszwecken zu beeinflussen

Besonders können mit der vorgeschlagenen Lösung, ggf. mit einer weiteren Modifikation, die folgenden Szenarien gelöst werden.

Gemäß einem Szenario werden Mischparks, also Windparks mit unterschiedlichen Windenergieanlagentypen und/oder Windparks mit eingeschränkten Windenergieanlagen betrachtet. Es geht also um Windenergieanlagen, die insbesondere temporär weniger Leistung erzeugen als sie könnten, z. B. weil sie jeweils im Nachlauf einer anderen Windenergieanlage stehen.

Für solche Windparks ergibt sich folgende Problemstellung.

Wenn die an die Modifizierungssteuerstruktur (802 gemäß Fig. 8) zurückgemeldeten Werte der Ist-Blindleistung, also der Anlagenblindleistung bzw. Anlagenistblindleistung $Q_{A1}$ ... $Q_{AN}$ in absoluten physikalischen Einheiten (var oder in Mvar) gemäß Fig. 8 verwendet werden, ergeben sich gleiche Blindleistungen (in var oder in Mvar) für alle Windenergieanlagen, die vereinfachend und synonym auch als WEA bezeichnet werden können. Dieser Sachverhalt ist in Mischparks mit unterschiedlichen WEA-Typen nicht optimal, da die WEA über unterschiedliche Nennblindleistungen verfügen können. Gleiche absolute Blindleistungen (in var oder Mvar) für alle WEA können zum Beispiel dazu führen, dass eine WEA ihre Nennblindleistung erreicht, während eine andere WEA mit einer größeren Blindleistung ihre Nennblindleistung noch nicht erreicht hat und daher noch nicht komplett ausgelastet ist.

Folgende Lösung wird vorgeschlagen:

Die zurückgemeldeten Werte der Ist-Blindleistung also der Anlagenblindleistung bzw. Anlagenistblindleistung $Q_{A1}$ ... $Q_{AN}$ werden als Prozentsatz der Nennblindleistung der jeweiligen WEA zurückgemeldet werden. Alternativ kann diese Umrechnung in der Parksteuereinrichtung, die auch als FCU bezeichnet wird, stattfinden. Somit ergeben sich in der dargestellten Struktur (Fig. 8) gleiche Blindleistungen in Prozentsatz der Nennblindleistung für alle WEA.

Anmerkung zu Windparks, die vereinfachend und synonym auch als Parks bezeichnet werden können, mit eingeschränkten WEA:

Der oben zu Mischparks erwähnte Sachverhalt kann auch bei Parks mit einem einheitlichen WEA-Typ vorkommen, wenn eine oder einige der WEAs aus einem technischen oder anderen Grund eingeschränkt arbeiten dürfen. Ein Beispiel hierfür ist, wenn ein Leistungsschrank in einer WEA defekt ist und die entsprechende WEA nach der Deaktivierung des betroffenen Leistungsschranks mit eingeschränktem Wirk- und Blindleistungsbereich weiterarbeiten kann. Auch in diesem Fall sind gleiche absolute Blindleistungen (in var oder in Mvar) für alle WEA nicht zielführend. Um dieses Problem zu lösen, sollen die zurückgemeldeten Werte der Ist-Blindleistung also der Anlagenblindleistung bzw. Anlagenistblindleistung $Q_{A1}$ ... $Q_{AN}$ in Prozentsatz der maximal verfügbaren Blindleistung der jeweiligen WEA umgerechnet werden.

Gemäß einem weiteren Szenario wird eine Limitierung der symmetrisierenden Blindleistungsunterschiede betrachtet.

Dazu ergibt sich folgende Problemstellung:

Falls eine Limitierung für die Symmetrisierung der WEA-Blindleistungen erwünscht ist, sollten die Ausgänge des Spannungskorrekturreglers 812 (s. Fig.8) begrenzt werden. Die einfachste Möglichkeit wäre, eine Limiter-Funktion ($\pm \Delta Q_{limit}$) für die Ausgänge des Spannungskorrekturreglers 812 zu verwenden. Das könnte aber in vielen Fällen dazu führen, dass der Mittelwert der Ausgänge des Spannungskorrekturreglers 812 nicht mehr dem Wert Null entspricht. Es sei darauf hingewiesen, dass der Mittelwert der Ausgänge des Spannungskorrekturreglers 812 zu jedem Zeitpunkt dem Wert Null entsprechen sollte. Ansonsten würde der einheitliche Sollwert $U_{WPS}$ durch die Symmetrisierung der WEA-Blindleistungen verfälscht werden.

Als Lösung wird das Folgende vorgeschlagen.

Als mögliche Lösung für die oben erwähnte Problemstellung wird folgende Modifikation an den Ausgängen des Spannungskorrekturreglers 812 vorgeschlagen, die oben schon erwähnt wurde und hier in anderen Worten durch die folgenden Schritte wiedergegeben wird.

1) Ermittle jeweils den Absolutwert für die Ausgänge des Spannungskorrekturreglers 812, also für den jeweiligen Spannungswert, der an dem Ausgang ausgegeben wird, den Absolutwert. Es ergeben sich also bei N Windenergieanlagen N Absolutwerte.

2) Von diesen Absolutwerten, also den N Absolutwerten wird der größte ausgewählt. Der kann als dem Betrage nach größter Spannungskorrekturwert angesehen werden. Diesem größten Absolutwert, der ein Spannungswert ist, wird ein zugehöriger Blindleistungswert $\Delta Q_{max}$ zugeordnet. Dieser Wert $\Delta Q_{max}$ bezeichnet die Differenzblindleistung, die aus dem größten Spannungskorrekturwert resultieren würde, würde sie an den entsprechenden proportionalen Regler der entsprechenden Windenergieanlage weitergegeben werden.

3) Vergleiche $\Delta Q_{max}$ mit $\Delta Q_{limit}$, wobei $\Delta Q_{limit}$ die maximale Blindleistungsabweichung bezeichnet, die als Begrenzung vorgesehen ist.

4) (a) wenn $\Delta Q_{max}$ kleiner oder gleich $\Delta Q_{limit}$ ist, dann reiche die Ausgänge des Blindleistungsreglers 308 ohne Modifikation weiter.

5) (b) wenn $\Delta Q_{max}$ größer als $\Delta Q_{limit}$ ist, dann multipliziere alle Ausgänge des Blindleistungsreglers 308 mit einem Faktor von $\Delta Q_{limit} / \Delta Q_{max}$ und reiche die Ergebnisse weiter.

Durch die oben erwähnte Modifikation werden die Ausgänge des Blindleistungsreglers 308, die als symmetrisierende Blindleistungsunterschiede bezeichnet werden können, auf einen Maximalwert von $\Delta Q_{limit}$ limitiert, während ihr Mittelwert zu jedem Zeitpunkt dem Wert Null entspricht.

Gemäß einem Szenario werden mögliche Probleme einer Koordination zwischen Windenergieanlagen und einer zentralen Parksteuerung während einer FRT-Störung betrachtet.

Es ergibt sich folgende Problemstellung:

Sinkt die Spannung am Netzanschlusspunkt, der vereinfachend und synonym auch als NAP bezeichnet werden kann, einer WEA infolge von einem Kurzschluss im Netz (innerhalb oder außerhalb des Windparks) unter eine vordefinierte Grenze, wechselt die WEA ihren Arbeitsmodus und geht von dem Normalbetriebsmodus in den FRT-Modus, der synonym auch als Alternativverfahren oder vereinfachtes Alternativerfahren bezeichnetwerden kann.

In verschiedenen Ländern sind unterschiedliche Verhaltensstrategien, die nachfolgend als Fehlerstrategien bezeichnet werden, für diesen FRT-Modus bzw. das Alternativverfahren vorgeschrieben. In den meisten Fehlerstrategien soll dem externen Sollwert, also dem vorgegebenen Blindleistungssollwert und damit dem daraus resultierenden Parkspannungssollwert der zentralen Parksteuerung, nicht mehr gefolgt werden. Stattdessen sollen anhand von einer vordefinierten Gleichung Blindströme in Abhängigkeit der Ist-Spannung eingespeist werden.

Da dem Sollwert der FCU in dem FRT-Modus nicht mehr gefolgt werden kann, besteht in so einem Fall die Gefahr, dass der übergeordnete Parkblindleistungsregler, der auch als FCU-Regler bezeichnet werden kann, gegen diese konzeptgemäße Abweichung regelt. Dadurch entstehen gegenläufige Regeleffekte auf der FCU- und WEA-Ebene, die nicht zielführend sind. Der Sachverhalt wird etwas komplizierter, wenn der Spannungseinbruch nah an der vordefinierten Grenze für eine Aktivierung des FRT-Modus liegt. Durch kleine Unterschiede zwischen der Spannung am NAP und der Spannung an der jeweiligen WEA können einige der WEA in den FRT-Modus gehen, während sich die anderen Windenergieanlagen im Normalbetrieb befinden. In so einem Fall soll die FCU die beiden Gruppen der WEA (die im Normalbetriebsmodus und die im FRT-Modus) bedienen könnten.

Dazu wird folgende Lösung vorgeschlagen:

Als Lösung für die oben erwähnte Problemstellung wird Folgendes vorgeschlagen: Sobald sich eine WEA in dem FRT-Modus befindet, wird der Modus-Wechsel an die FCU zurückgemeldet. Nun sind basierend auf der Tiefe des Spannungseinbruches zwei Fälle möglich:

Fall 1) Der Spannungseinbruch ist so tief, dass die Spannung an allen WEA den Grenzwert für den Eintritt in den FRT-Modus unterschreitet. Somit gehen alle durch die FCU geregelten WEA in den FRT-Modus und stellen meist unabhängig vom FCU-Blindleistungssollwert einen gewissen Blindstrom, der durch die aktivierte Fehlerstrategie bestimmt wird. Die FCU erhält die Information, dass sich alle WEA in FRT-Modus befinden. Um gegenläufige Regeleffekte auf der FCU- und WEA-Ebene zu vermeiden, wäre es möglich, infolge dieser Informationsrückmeldung den U-Sollwert und etwaige Integral-Reglerwerte in der FCU einzufrieren und diese erst nach der Rückkehr aller WEA zum Normalbetriebsmodus wieder zu aktivieren.

Fall 2) Der Spannungseinbruch ist so tief, dass die Spannung an einer oder mehreren WEA den Grenzwert für den Eintritt in den FRT-Modus unterschreiten, während sie an wenigstens einer WEA weiterhin oberhalb dieses Grenzwerts bleibt. Für diesen Fall werden folgende Vorgehensweisen als Alternativen vorgeschlagen

Variante 1: Der U-Sollwert und etwaige Integral-Reglerwerte in der FCU sind ähnlich wie bei Fall 1) einzufrieren. Demzufolge ist keine Sollwertänderung während der FRT-Störung möglich, auch wenn die WEA im Normalbetrieb zur Realisierung dieses Sollwerts beitragen könnten.

Variante 2: Bei dieser Variante werden die WEA, die sich nicht in dem FRT-Modus befinden, die Realisierung einer Sollwertänderung in einem eingeschränkten Umfang ermöglichen. Diese kann folgendermaßen erreicht werden:

Die zurückgemeldete Ist-Blindleistung der in dem FRT-Modus befindlichen WEA wird von der gemessenen Ist-Blindleistung, die besonders am NAP vom Windpark erfasst wird, abgezogen. Somit wird die Ist-Blindleistung am NAP vom Windpark, die am Eingang für den FCU-Regler anliegt bzw. dort eingegeben wird, um die Blindleistung der WEA, die aufgrund des FRT-Modus nicht regelbar sind, "bereinigt", die Summe der nicht regelbaren Blindleistungen wird somit abgezogen.

Andererseits wird der Blindleistungssollwert, der am Eingang für den FCU-Regler anliegt bzw. dort eingegeben wird, mit dem folgenden Faktor $k_Q$ multipliziert:

$$k_Q = (Q_{nennWP} - Q_{nennFRT})/Q_{nennWP}$$

wobei

$Q_{nennWP}$: Nennblindleistung des Windparks

$Q_{nennFRT}$: Blindleistungsanteil der in dem FRT-Modus befindlichen WEA an der Nennblindleistung des Windparks

Somit wird der Blindleistungssollwert an den Anteil der im Normalbetriebsmodus befindlichen WEA angepasst.

Nun kann die FCU-Regler mit den "bereinigten" Soll- und Istwerten die sich in dem Normalbetriebsmodus befindlichen WEA regeln, während sich die anderen WEA in dem FRT-Modus befinden.

Anmerkung: Die Variante 2 ist oben beispielhaft für einen Q-Regler auf der FCU-Ebene erklärt worden. Sie kann aber mit ähnlichen Überlegungen auf andere FCU-Regler-Typen angewendet werden, z.B. einen Phi-Regler, der in Abhängigkeit einer Spannungsabweichung einen Phasenwinkel vorgibt.

**Patentansprüche**

1. Verfahren zum Bereitstellen einer Parkblindleistung durch einen mehrere Windenergieanlagen aufweisenden Windpark, umfassend die Schritte

   - Empfangen eines Parkblindleistungssollwertes als Vorgabe einer durch den Windpark einzuspeisenden Blindleistung,
   - Bestimmen eines Parkspannungssollwertes als gemeinsamen Spannungssollwert für alle Windenergieanlagen in Abhängigkeit von dem Parkblindleistungssollwert,
   - Bestimmen eines individuellen Anlagenspannungssollwertes jeweils für eine der Windenergieanlagen in Abhängigkeit von dem Parkspannungssollwert,
   - Bestimmen und Abgeben einer individuellen Anlagenblindleistung oder eines individuellen Blindstroms jeweils durch eine der Windenergieanlagen in Abhängigkeit von einer Anlagenspannungsdifferenz als Differenz zwischen einer Anlagenistspannung und dem individuellen Anlagenspannungssollwert derjeweiligen Windenergieanlage und wobei
   - der individuelle Anlagenspannungssollwert jeweils in Abhängigkeit von der individuellen Anlagenblindleistung derjeweiligen Windenergieanlage und in Abhängigkeit von mehreren, insbesondere allen individuellen Anlagenblindleistungen der Windenergieanlagen des Windparks bestimmt wird.

2. Verfahren nach Anspruch 1, **dadurch gekennzeichnet, dass**

   - jeweils der individuelle Anlagenspannungssollwert aus dem Parkspannungssollwert und einem individuellen Spannungskorrekturwert, insbesondere durch Abziehen dieses individuellen Spannungskorrekturwertes vom Parkspannungssollwert, bestimmt wird, wobei
   - der individuelle Spannungskorrekturwert in Abhängigkeit von einer Mittelwertdifferenz als Differenz zwischen derjeweiligen individuellen Anlagenblindleistung und einem Mittelwert aller individuellen Anlagenblindleistungen bestimmt wird, wobei insbesondere
   - die Mittelwertdifferenz zur Bestimmung des individuellen Spannungskorrekturwertes über einen Regler, insbesondere PI-Regler gegeben wird.

3. Verfahren nach Anspruch 1 oder 2, **dadurch gekennzeichnet, dass**

   - der individuelle Spannungskorrekturwert in Abhängigkeit von einem für die jeweilige Windenergieanlage individuellen Anlagenoffset bestimmt wird, insbesondere so, dass
   - eine bzw. die Mittelwertdifferenz berücksichtigt wird, die als Differenz zwischen der jeweiligen individuellen Anlagenblindleistung und einem Mittelwert aller individuellen Anlagenblindleistungen bestimmt wird, wobei
   - der individuelle Spannungskorrekturwert in Abhängigkeit von der Mittelwertdifferenz und dem individuellen Offset bestimmt wird, insbesondere so, dass der individuelle Anlagenoffset jeweils auf die Mittelwertdifferenz aufaddiert wird, um eine modifizierte Mittelwertdifferenz zu bestimmen und insbesondere

- die modifizierte Mittelwertdifferenz zur Bestimmung des individuellen Spannungskorrekturwertes über einen bzw. den Regler, insbesondere PI-Regler gegeben wird.

4. Verfahren nach einem der vorstehenden Ansprüche, **dadurch gekennzeichnet, dass**

- eine Summe aller Anlagenoffsets null ist und/oder
- die Anlagenoffsets so bestimmt werden, dass Anlagenblindleistungen an den Windenergieanlagen mit unterschiedlichen Vorzeichen vermieden werden, dass sie insbesondere so bestimmt werden, dass ein Vergleichsmaß einen Vergleichsgrenzwert, der zwischen 0,5 und 0,95 liegt oder 1 ist, nicht unterschreitet oder zumindest nicht weniger als 90% des Vergleichsmaßes beträgt als für den Fall, dass alle Anlagenoffsets null sind, wobei

- das Vergleichsmaß durch ein Verhältnis des Betrags einer Summe aller eingespeisten Anlagenblindleistungen zu einer Summe der Beträge aller Anlagenblindleistungen definiert ist.

5. Verfahren nach einem der vorstehenden Ansprüche, **dadurch gekennzeichnet, dass**

- ein bzw. der individuelle Spannungskorrekturwert, zum Bestimmen des jeweiligen individuellen Anlagenspannungssollwertes aus dem Parkspannungssollwert, jeweils so bestimmt wird, dass eine Summe über alle individuellen Anlagenspannungssollwerte null ist.

6. Verfahren nach einem der vorstehenden Ansprüche, **dadurch gekennzeichnet, dass**

- die individuelle Anlagenblindleistung dadurch bestimmt wird, dass
- einer Spannungsdifferenz als Differenz zwischen dem individuellen Anlagenspannungssollwert und einer an der jeweiligen Windenergieanlage anliegenden Anlagenistspannung durch Einstellen der individuellen Anlagenblindleistung entgegengewirkt wird.

7. Verfahren nach einem der vorstehenden Ansprüche, **dadurch gekennzeichnet, dass**

- die Windenergieanlagen jeweils ihre abgegebene individuelle Anlagenblindleistung als Anlagenblindleistungsistwert erfassen und an eine zentrale Steuereinheit des Windparks übertragen, zur Verwendung in der Bestimmung aller individueller Anlagenspannungssollwerte.

8. Verfahren nach einem der vorstehenden Ansprüche, **dadurch gekennzeichnet, dass**

- die individuelle Anlagenblindleistung jeweils berücksichtigt und/oder übertragen wird als relativer, insbesondere prozentualer Wert bezogen auf eine maximal verfügbare Anlagenblindleistung der jeweiligen Windenergieanlage oder eine Nennblind- oder -wirkleistung der jeweiligen Windenergieanlage.

9. Verfahren nach einem der vorstehenden Ansprüche, **dadurch gekennzeichnet, dass**

- ein bzw. der individuelle Spannungskorrekturwert, zum Bestimmen des jeweiligen individuellen Anlagenspannungssollwertes aus dem Parkspannungssollwert,
- durch Vorgabe einer Korrekturbegrenzung begrenzbar ist, wobei
- zur Begrenzung der individuellen Spannungskorrekturwerte die Korrekturbegrenzung so auf alle individuellen Spannungskorrekturwerte angewendet wird, dass eine Summe aller individuellen Spannungskorrekturwerte gleichbleibt, insbesondere null bleibt, wobei insbesondere
- im Falle einer Vorgabe der Korrekturbegrenzung und wenn wenigstens ein individueller Spannungskorrekturwert, bevor er begrenzt wird, die Korrekturbegrenzung überschreitet,
- ein Begrenzungsverhältnis gebildet wird, als Verhältnis zwischen der Korrekturbegrenzung und einem dem Betrage nach maximalen Spannungskorrekturwert, als größtem Wert aller individuellen Spannungskorrekturwerte vor einer Begrenzung, und
- jeder individuelle Spannungskorrekturwert mit dem Begrenzungsverhältnis multipliziert wird, um dadurch jeweils einen individuellen modifizierten Spannungskorrekturwert zu bilden, der zum Bestimmen des jeweiligen individuellen Anlagenspannungssollwertes aus dem Parkspannungssollwert verwendet wird.

10. Verfahren nach einem der vorstehenden Ansprüche, **dadurch gekennzeichnet, dass**

- im Falle des Auftretens eines Netzfehlers, insbesondere in einem FRT-, LVRT- oder OVRT-Fall,
- an einer, einigen oder allen Windenergieanlagen eine Statik, die einen Zusammenhang zwischen Anlagenspannungsdifferenz und einem von der jeweiligen Windenergieanlage einzuspeisenden Anlagenblindstrom vorgibt, gegenüber einer Situation ohne Netzfehler verändert wird, und/oder
- das Bestimmen der individuellen Anlagenblindleistung bzw. des individuellen Anlagenblindstromes an einer, einigen oder allen Windenergieanlagen in ein vereinfachtes Alternativverfahren geändert wird, bei dem insbesondere
- jeweils die betreffende Windenergieanlage einen individuellen Anlagenblindstrom in Abhängigkeit von der erfassten an der jeweiligen Windenergieanlage anliegende Anlagenistspannung und einem fest vorgegebenen Spannungssollwert und/oder in Abhängigkeit eines von der betreffenden Windenergieanlage vor dem Auftreten des Netzfehlers eingespeisten Blindstroms bestimmt und/oder
- das Alternativverfahren eine veränderte Statik verwendet, die einen Zusammenhang zwischen einer bzw. der Spannungsdifferenz und dem individuellen Anlagenblindstrom angibt, wobei insbesondere
- für die Windenergieanlagen, die zum vereinfachten Alternativverfahren wechseln, das Bestimmen eines individuellen Anlagenspannungssollwertes eingefroren wird, bis der Netzfehler beendet ist und/oder bis die Windenergieanlagen das vereinfachte Alternativverfahren wieder verlassen haben, und insbesondere

- bei Verwendung eines Reglers mit integralem Anteil der integrale Anteil eingefroren wird.

11. Verfahren nach einem der vorstehenden Ansprüche, **dadurch gekennzeichnet, dass**

- im Falle des Auftretens eines Netzfehlers, insbesondere in einem FRT-, LVRT- oder OVRT-Fall,
- wenn das Bestimmen der individuellen Anlagenblindleistung an einer oder einigen, aber nicht allen Windenergieanlagen in ein vereinfachtes Alternativverfahren geändert wird,
- das Bestimmen der individuellen Anlagenspannungssollwerte für die Windenergieanlagen fortgesetzt wird, an denen nicht in das vereinfachte Alternativverfahren geändert wurde, wobei
- zur Bestimmung der individuellen Anlagenspannungssollwerte eine Summe aller eingespeisten Blindleistungen von nur den Windenergieanlagen verwendet wird, an denen nicht in das vereinfachte Alternativverfahren geändert wurde.

12. Verfahren nach einem der vorstehenden Ansprüche, **dadurch gekennzeichnet, dass**

- ein Korrekturregler zum Bestimmen eines bzw. des individuellen Spannungskorrekturwertes aus einer bzw. der Mittelwertdifferenz als Differenz zwischen der jeweiligen individuellen Anlagenblindleistung und einem Mittelwert aller individuellen Anlagenblindleistungen, jeweils so parametriert wird, dass
- der Korrekturregler ähnlich schnell oder schneller als ein Parkregler zum Bestimmen des Parkspannungssollwertes ist, und/oder
- dass der Korrekturregler eine Regelungszeitkonstante aufweist, die maximal doppelt so groß wie eine Regelungszeitkonstante des Parkreglers ist, insbesondere kleiner ist.

13. Windpark zum Bereitstellen einer Parkblindleistung durch mehrere Windenergieanlagen des Windparks, wobei der Windpark eine Steuerung aufweist, die dazu vorbereitet ist, ein Verfahren zum Bereitstellen der Parkblindleistung mit den folgenden Schritten auszuführen:

- Empfangen eines Parkblindleistungssollwertes als Vorgabe einer durch den Windpark einzuspeisenden Parkblindleistung,
- Bestimmen eines Parkspannungssollwertes als gemeinsamen Spannungssollwert für alle Windenergieanlagen in Abhängigkeit von dem Parkblindleistungssollwert,
- Bestimmen eines individuellen Anlagenspannungssollwertes jeweils für eine der Windenergieanlagen in Abhängigkeit von dem Parkspannungssollwert,
- Bestimmen und Abgeben einer individuellen Anlagenblindleistung jeweils durch eine der Windenergieanlagen in Abhängigkeit von einer Anlagenspannungsdifferenz als Differenz zwischen einer Anlagenistspannung und dem individuellen Anlagenspannungssollwert der jeweiligen Windenergieanlage und wobei
- der individuelle Anlagenspannungssollwert jeweils in Abhängigkeit von der individuellen Anlagenblindleistung der jeweiligen Windenergieanlage und in Abhängigkeit von mehreren, insbesondere allen individuellen Anlagenblindleistungen der Windenergieanlagen des Windparks bestimmt wird.

14. Windpark nach Anspruch 13, **dadurch gekennzeichnet, dass** er-eine zentrale Parksteuereinheit und mehrere Anlagensteuerungen aufweist, wobei

- jeweils eine der Anlagensteuerungen an jeweils einer Windenergieanlage angeordnet ist,
- die Anlagensteuerungen mit der zentralen Parksteuereinheit über ein Kommunikationssystem verbunden sind, insbesondere über ein Daten-Bussystem, und
- ein Verfahren zum Bereitstellen der Parkblindleistung auf der zentralen Parksteuereinheit und den mehrere Anlagensteuerungen implementiert ist.

15. Windpark nach Anspruch 13 oder 14, **dadurch gekennzeichnet, dass**

- er dazu vorbereitet ist, ein Verfahren gemäß einem der Ansprüche 1 bis 12 auszuführen und/oder dass
- ein Verfahren gemäß einem der Ansprüche 1 bis 12 in einer bzw. der zentralen Parksteuereinheit und mehreren bzw. den mehreren Anlagensteuerungen implementiert ist.

Fig. 1

Fig. 2

300

$Q_{WPI}$

302

$U_{AI1}$

304

$Q_{WPS}$ → μ 306 $U_{WPS}$ P - μ 308 → lq1

Fig. 3

U

$U_{WPS}$

$U_{AI1}$

$t_1$

t

Q

$Q_{WPI}$

$t_1$

t

Fig. 4

Fig. 5

Fig. 6

Fig. 7

Fig. 8

Fig. 9

EP 4 629 467 A1

Europäisches
Patentamt

European
Patent Office

Office européen
des brevets

# EUROPÄISCHER RECHERCHENBERICHT

Nummer der Anmeldung

EP 24 16 8477

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 659 137 B1 (SENVION GMBH [DE]) 9. März 2016 (2016-03-09) * Abbildung 1 * * Absätze [0013] - [0050] * - - - - - | 1-15 | INV. H02J3/38 H02J3/50 |
| A | EP 3 068 006 B1 (SENVION GMBH [DE]) 10. April 2019 (2019-04-10) * Abbildung 1 * * Absätze [0009] - [0030] * - - - - - | 1-15 | |
| A | EP 1 802 866 B1 (REPOWER SYSTEMS AG [DE]) 23. September 2009 (2009-09-23) * Abbildung 1 * * Absätze [0001] - [0033] * - - - - - | 1-15 | |
| | | | RECHERCHIERTE SACHGEBIETE (IPC) |
| | | | H02J |

Der vorliegende Recherchenbericht wurde für alle Patentansprüche erstellt

| Recherchenort | Abschlußdatum der Recherche | Prüfer |
|---|---|---|
| München | 4. September 2024 | Berger, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 24 16 8477

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2024

| Im Recherchenbericht angeführtes Patentdokument | Datum der Veröffentlichung | Mitglied(er) der Patentfamilie | Datum der Veröffentlichung |
|---|---|---|---|
| EP 2659137 B1 | 09-03-2016 | DE 102010056456 A1 | 21-06-2012 |
| | | DK 2659137 T3 | 13-06-2016 |
| | | EP 2659137 A2 | 06-11-2013 |
| | | ES 2573134 T3 | 06-06-2016 |
| | | US 2013175870 A1 | 11-07-2013 |
| | | WO 2012089675 A2 | 05-07-2012 |
| EP 3068006 B1 | 10-04-2019 | DE 102015003169 A1 | 15-09-2016 |
| | | DK 3068006 T3 | 22-07-2019 |
| | | EP 3068006 A1 | 14-09-2016 |
| | | ES 2739215 T3 | 29-01-2020 |
| EP 1802866 B1 | 23-09-2009 | AT E443808 T1 | 15-10-2009 |
| | | AU 2005291458 A1 | 13-04-2006 |
| | | CA 2581917 A1 | 13-04-2006 |
| | | CN 101091057 A | 19-12-2007 |
| | | DE 102004048341 A1 | 13-04-2006 |
| | | DK 1802866 T3 | 07-12-2009 |
| | | EP 1802866 A1 | 04-07-2007 |
| | | ES 2332525 T3 | 08-02-2010 |
| | | US 2008073912 A1 | 27-03-2008 |
| | | WO 2006037576 A1 | 13-04-2006 |

EPO FORM P0461

Für nähere Einzelheiten zu diesem Anhang : siehe Amtsblatt des Europäischen Patentamts, Nr.12/82